# EUROPÄISCHE PATENTSCHRIFT

(11) **EP 3 635 063 B1**
(45) Veröffentlichungstag und Bekanntmachung des Hinweises auf die Patenterteilung: **13.12.2023**
(21) Anmeldenummer: 18724606.1
(22) Anmeldetag: 24.05.2018
(51) Int. Cl.: C09D 5/18, C09D 171/00, C09D 175/04

(54) **BRANDSCHUTZ-ZUSAMMENSETZUNG, MEHRKOMPONENTENSYSTEM UND DEREN VERWENDUNG**
FIRE-RESISTANT COMPOUND, MULTICOMPONENT SYSTEM AND ITS UTILISATION
COMPOSITION IGNIFUGE, SYSTÈME MULTICOMPOSANT ET SON UTILISATION

(30) Priorität: 06.06.2017 EP 17174478
(43) Veröffentlichungstag der Anmeldung: 15.04.2020
(73) Patentinhaber: Hilti Aktiengesellschaft, 9494 Schaan (LI)
(72) Erfinder: STUDENT, Katja, 86152 Augsburg (DE); MILLER, Jekaterina, 73760 Ostfildern (DE); JOCHMANN, Phillip, 89073 Ulm (DE); SCHLENK, Stefan, 86899 Landsberg (DE); SPEDDING, Richard, 86899 Landsberg am Lech (DE)
(74) Vertreter: Hilti Aktiengesellschaft Corporate Intellectual Property
(86) Internationale Anmeldenummer: PCT/EP2018/063592
(87) Internationale Veröffentlichungsnummer: WO 2018/224317

(56) Entgegenhaltungen:
- EP-A1- 2 955 209
- WO-A1-2010/131037
- WO-A2-2014/095834

## Beschreibung

Die vorliegende Erfindung betrifft eine Brandschutz-Zusammensetzung mit intumeszierenden Eigenschaften, die ein Bindemittel auf Basis eines Polymers, das alkoxyfunktionalisierte Silangruppen trägt, enthält, ein diese Brandschutz-Zusammensetzung enthaltendes Mehrkomponentensystem sowie deren Verwendung für den Brandschutz, insbesondere für Beschichtungen von Bauteilen, wie Stützen, Trägern, oder Fachwerkstäben, zur Erhöhung der Feuerwiderstandsdauer.

Dämmschichtbildende Zusammensetzungen, auch intumeszierende Zusammensetzungen genannt, werden üblicherweise zur Bildung von Beschichtungen auf die Oberfläche von Bauteilen aufgebracht, um diese vor Feuer oder gegen große Hitzeeinwirkung etwa in Folge eines Brandes zu schützen.

Hierzu existieren im Stand der Technik verschiedene Systeme. Im Wesentlichen wird zwischen 100%-Systemen und lösemittel- bzw. wasserbasierten Systemen unterschieden.

Die Systeme auf Lösemittel- oder Wasserbasis haben den Nachteil, dass die Trockenzeiten, auch Aushärtezeiten genannt, lang sind und zudem mehrere Schichten aufgetragen werden müssen, also mehrerer Arbeitsgänge bedürfen, um die erforderliche Schichtdicke zu erreichen. Da jede einzelne Schicht vor dem Auftragen der nächsten Schicht entsprechend getrocknet sein muss, führt dies zum einen zu einem hohen Aufwand an Arbeitszeit und dementsprechend hohen Kosten und zu einer Verzögerung bei der Fertigstellung des Bauwerks, da je nach klimatischen Bedingungen zum Teil mehrere Tage vergehen, bis die erforderliche Schichtdicke aufgetragen ist. Nachteilig ist auch, dass durch die erforderliche Schichtdicke die Beschichtung während des Trocknens oder bei Hitzeeinwirkung zur Rissbildung und zum Abblättern neigen kann, wodurch im schlimmsten Fall der Untergrund teilweise freigelegt wird, insbesondere bei Systemen, bei denen das Bindemittel nicht nach Verdunsten des Lösungsmittels bzw. des Wassers nachhärtet. Die erzeugten Schichten müssen häufig abgedeckt oder in einer anderen Form geschützt werden.

Um diesen Nachteil zu umgehen, wurden Zwei- oder Mehrkomponentensysteme entwickelt, die nahezu ohne Lösemittel auskommen, so dass eine Aushärtung wesentlich schneller erfolgt und zudem dickere Schichten in einem Arbeitsgang aufgetragen werden können, so dass die erforderliche Schichtdicke wesentlich schneller aufgebaut ist.

Aus der WO 2010/131037 A1 und den daraus hervorgegangenen weiteren Anmeldungen ist eine Zusammensetzung bekannt, die auf Silan-terminierten Polyurethanen oder Silan-terminierten Polyethern als Bindemittel basiert, mit dazu kompatiblen Weichmachern und mit intumeszierenden Additiven. Ferner wird eine Konfektionierung der Zusammensetzung in zwei Komponenten beschrieben, wobei das Silan-terminierte Prepolymer in einer ersten Komponente und davon getrennt der intumeszierende Bestandteil und der Weichmacher in einer zweiten Komponente enthalten sind. Hierdurch soll verhindert werden, dass die in der zweiten Komponente enthaltenen Bestandteile getrocknet werden müssen, da in der ersten Komponente lediglich das Prepolymer enthalten ist, was zu einer besseren Lagerstabilität führen soll.

Die Erfinder haben festgestellt, dass die in der WO 2010/131037 A1 beschriebene Zusammensetzung aufgrund der relativ hohen Viskosität schlecht sprühbar ist, wenn auf einen Weichmacher verzichtet wird und die Zusammensetzung eine verminderte Lagerstabilität aufweist, wenn die Intumeszenzmischung zusammen mit dem Polymer konfektioniert wird. Ein weiterer Nachteil ist, dass durch den Weichmacher gesundheitsschädliche und/oder flüchtige organische Verbindungen (volatile organic compounds, VOC) in die Zusammensetzung eingebracht werden.

Aus der EP 2 955 209 A1 ist ebenfalls eine dämmschichtbildende Zusammensetzung bekannt, die ein Bindemittel auf Basis eines Silan-funktionalisierten Polymers und dämmschichtbildende Brandschutzadditive enthält.

Aus der WO 14/079873 A1 und der WO 14/095834 A2 ist jeweils eine zwei- oder mehrkomponentige dämmschichtbildende Zusammensetzung bekannt, die ein Bindemittel auf Basis eines Silan-funktionalisierten Polymers, Wasser als Vernetzungsmittel und als Intumeszenzmischung einen Dehydrierungskatalysator, ein Treibmittel und gegebenenfalls einen Kohlenstofflieferanten enthält, wobei das Polymer und das Vernetzungsmittel getrennt voneinander in unterschiedlichen Komponenten gelagert werden und die Intumeszenzmischung zusammen mit dem Polymer in einer Komponente enthalten ist. Nachteilig an der Zusammensetzung ist, dass die Lagerstabilität beeinträchtigt wird, wenn die Intumeszenzmischung und das Polymer in zusammen in einer Komponente gelagert werden.

Der Erfindung liegt daher die Aufgabe zugrunde, ein dämmschichtbildendes Beschichtungssystem der eingangs erwähnten Art zu schaffen, das die genannten Nachteile vermeidet, das insbesondere lagerstabil ist und auch ohne die Verwendung eines Weichmachers eine gute Sprühbarkeit aufweist.

Diese Aufgabe wird durch die Brandschutz-Zusammensetzung nach Anspruch 1 und das Mehrkomponentensystem nach Anspruch 11 gelöst. Bevorzugte Ausführungsformen sind den Unteransprüchen zu entnehmen.

Die Erfinder haben festgestellt, dass durch die Anwesenheit von den in intumeszierenden Zusammensetzungen eingesetzten Kohlenstofflieferanten, also Verbindungen, die Hydroxylgruppen oder Hydroxylgruppen-bildende Gruppen haben, in der Komponente, in der auch das alkoxysilanfunktionalisierte Polymer enthalten ist, die Lagerstabilität der Zusammensetzung stark herabgesetzt wird.

Ein besonderer Vorteil der erfindungsgemäßen Brandschutz-Zusammensetzung, der durch die Verwendung von flüssigen Kohlenstofflieferanten bedingt ist, ist die Verringerung der Viskosität der Mischung nach dem Vermischen der Bestandteile der Brandschutz-Zusammensetzung, so dass auf Weichmacher verzichtet werden kann. Durch die geringe Viskosität bleibt die Zusammensetzung, auch bei einem hohen Feststoffanteil, einfach zu verarbeiten, insbesondere durch gängige Sprühverfahren.

Ein weiterer Vorteil der erfindungsgemäßen Brandschutz-Zusammensetzung, derdurch den Verzicht auf Weichmacher erreicht wird, ist die minimierte Belastung von Mensch und Umwelt durch flüchtige organische Verbindungen (volatile organic compounds, VOC). Entsprechend ist dies ein Vorteil gegenüber den lösemittelbasierten Systemen.

Ein Vorteil der Trennung von Bindemittel und Kohlenstofflieferant und damit der Trennung des Bindemittels von den Verbindungen, die Hydroxylgruppen oder Hydroxylgruppen-bildende Gruppen haben, der insbesondere durch die Konfektionierung als Mehrkomponentensystem erreicht wird, ist eine sehr gute Lagerstabilität.

Zum besseren Verständnis der Erfindung werden die folgenden Erläuterungen der hierin verwendeten Terminologie als sinnvoll erachtet. Im Sinne der Erfindung bedeuten die verwendeten Begriffe:
- *"Polyol"* eine Verbindung, die mehr als eine Hydroxylgruppe (-OH) enthält, sogenannter Polyalkohol (mehrwertiger Alkohol), wobei die Verbindung sowohl linear, verzweigt, als auch zyklisch aufgebaut sein kann;
- *"chemische Intumeszenz"* die Bildung einer voluminösen, isolierenden Ascheschicht durch aufeinander abgestimmte Verbindungen, die bei Hitzeeinwirkung miteinander reagieren;
- *"physikalische Intumeszenz"* die Bildung einer voluminösen, isolierenden Schicht durch Aufblähen einer Verbindung, die, ohne dass eine chemische Reaktion zwischen zwei Verbindungen stattgefunden hat, bei Hitzeeinwirkung Gase freisetzt, wodurch das Volumen der Verbindung um ein Vielfaches des ursprünglichen Volumens zunimmt;
- *"dämmschichtbildend",* dass im Brandfall ein fester mikroporöser Kohleschaum entsteht, so dass die gebildete feinporige und dicke Schaumschicht, die sogenannte Aschekruste, je nach Zusammensetzung ein Substrat gegen Hitze isoliert;
- *"Kohlenstofflieferant"* eine organische Verbindung, die durch unvollständige Verbrennung ein Kohlenstoffgerüst hinterlässt und nicht vollständig zu Kohlendioxid und Wasser verbrennt (Carbonifizierung); diese Verbindungen werden auch als *"Kohlenstoffgerüstbildner"* bezeichnet;
- *"Säurebildner"* eine Verbindung, die unter Hitzeeinwirkung, d.h. oberhalb etwa 150°C beispielsweise durch Zersetzung eine nicht flüchtige Säure bildet und dadurch als Katalysator für die Carbonifizierung wirkt; zudem kann sie zur Erniedrigung der Viskosität der Schmelze des Bindemittels beitragen; hiermit gleichbedeutend wird der Begriff *"Dehydrierungskatalysator"* verwendet;
- *"Treibmittel"* eine Verbindung, die sich bei erhöhter Temperatur unter Entwicklung inerter, d.h. nicht-brennbarer Gase zersetzt und gegebenenfalls das erweichte Bindemittel zu einem Schaum aufbläht (Intumeszenz); dieser Begriff wird gleichbedeutend mit *"Gasbildner"* verwendet;
- *"Aschekrustenstabilisator"* eine sogenannte gerüstbildende Verbindung, die das Kohlenstoffgerüst (Aschekruste), das aus dem Zusammenwirken der Kohlenstoffbildung aus dem Kohlenstofflieferanten und dem Gas aus dem Treibmittel, oder der physikalischen Intumeszenz gebildet wird, stabilisiert. Die prinzipielle Wirkungsweise ist dabei die, dass die an sich sehr weichen entstehenden Kohlenstoffschichten durch anorganische Verbindungen mechanisch verfestigt werden. Die Zugabe eines solchen Aschekrustenstabilisators trägt zu einer wesentlichen Stabilisierung der Intumeszenzkruste im Brandfall bei, da diese Additive die mechanische Festigkeit der intumeszierenden Schicht erhöhen und/oder deren Abtropfen verhindern;
- *"Mehrkomponentensystem"* ein System bzw. Behältnis, wie etwa Gebinde, Eimer oder Kartusche, das mehrere voneinander getrennt gelagerte Komponenten umfasst, so dass alle Bestandteile der Brandschutz-Zusammensetzung erst während des Ausbringens oder nach dem Ausbringen gemischt werden; der Begriff *"mehrere Komponenten"* bedeutet, dass zwei oder mehr Komponenten vorhanden sind; in einer bevorzugten Ausführungsform ist das Mehrkomponentensystem ein Zweikomponentensystem mit zwei getrennten Komponenten;
- *"flüssig"* in Zusammenhang mit dem Begriff *"flüssiger Kohlenstofflieferant",* dass die organische Verbindung bei 25°C und atmosphärischem Druck eine Flüssigkeit ist; die Flüssigkeit hat im Allgemeinen eine Viskosität zwischen 0,0001 und 50.000 Pa s liegt, wobei bei der Viskosität auf die Herstellerangaben abzustellen ist;
- *"ein", "eine", "einer"* als Artikel vor einer chemischen Verbindungsklasse, z.B. vor dem Wort "alkoxysilanfunktioneller Polyether", dass mindestens eine, d.h. eine oder mehrere unter diese chemische Verbindungsklasse fallende Verbindungen, z.B. verschiedene alkoxsilanfunktionelle Polyether, gemeint sein können;
- *"mindestens ein", "mindestens eine", "mindestens einer"* zahlenmäßig *"ein oder mehrere";* in einer bevorzugten Ausführungsform ist mit diesem Begriff zahlenmäßig *"ein", "eine", "einer"* gemeint;
- *"enthalten" und "umfassen",* dass neben den genannten Bestandteilen noch weitere vorhanden sein können. Diese Begriffe sind einschließlich gemeint und umfassen daher auch *"bestehen aus". "Bestehen aus"* ist abschließend gemeint und bedeutet, dass keine weiteren Bestandteile vorhanden sein können. In einer bevorzugten Ausführungsform bedeuten die Begriffe *"enthalten" und "umfassen"* den Begriff *"bestehen aus";*
- ein durch Zahlen begrenzter Bereich, z.B. "5 bis 60 Gew.-%", dass die beiden Eckwerte und jeder Wert innerhalb dieses Bereichs einzeln offenbart sind.

Alle in diesem Text genannten Normen (z.B. DIN-Normen) wurden in der zum Anmeldetag dieser Anmeldung aktuellen Ausgabe verwendet.

Ein erster Gegenstand der Erfindung ist eine Brandschutz-Zusammensetzung. Ein zweiter Gegenstand der Erfindung ist ein Mehrkomponentensystem, welches die Brandschutz-zusammensetzung enthält. Ein Dritter Gegenstand der Erfindung ist die Verwendung sowohl der Brandschutz-Zusammensetzung als auch des Mehrkomponentensystems.

Die erfindungsgemäße Brandschutz-Zusammensetzung umfasst
- ein alkoxysilanfunktionelles Polymer, das terminiert und/oder als Seitengruppen entlang der Polymerkette alkoxyfunktionelle Silangruppen der allgemeinen Formel (I) enthält

   -Si(R¹)ₘ(OR²)₃₋ₘ (I),

   worin R¹ für einen linearen oder verzweigten C₁-C₁₆-Alkylrest, R² für einen linearen oder verzweigten C₁-C₆-Alkylrest und m für eine ganze Zahl von 0 bis 2 steht,
- einen Dehydrierungskatalysator,
- einen flüssigen Kohlenstofflieferanten, und
- gegebenenfalls ein Treibmittel,
wobei das alkoxysilanfunktionelle Polymer reaktionsinhibierend getrennt von dem flüssigen Kohlenstofflieferanten vorliegt und der flüssige Kohlenstofflieferant aus der Gruppe bestehend aus flüssigen Polyether-Polyolen, flüssigen Polyester-Polyolen, flüssigen glycerinbasierten Polyolen und Mischungen davon und flüssigen Epoxid-Verbindungen ausgewählt ist.

Erfindungsgemäß ist ein Polymer ein Molekül mit sechs oder mehr Wiederholungseinheiten, das eine Struktur aufweisen kann, die linear, verzweigt, sternförmig, gewunden, hyperverzweigt oder vernetzt sein kann. Polymere können eine einzelne Art von Wiederholungseinheiten aufweisen ("Homopolymere") oder sie können mehr als eine Art von Wiederholungseinheiten aufweisen ("Copolymere"). Wie hierin verwendet, umfasst der Begriff *"Polymer"* sowohl Präpolymere, welche auch Oligomere mit 2 bis 5 Wiederholungseinheiten umfassen können, wie die eingesetzten alkoxysilanfunktionellen Verbindungen, welche in Gegenwart von Wasser unter Bildung von Si-O-Si-Bindungen miteinander reagieren, als auch die durch die eben genannte Reaktion gebildeten polymeren Verbindungen.

Erfindungsgemäß umfasst das alkoxysilanfunktionelle Polymer ein Grundgerüst, das aus der Gruppe, bestehend aus einem Polyether, Polyester, Polyetherester, Polyamid, Polyurethan, Polyesterurethan, Polyetherurethan, Polyetheresterurethan, Polyamidurethan, Polyharnstoff, Polyamin, Polycarbonat, Polyvinylester, Polyacrylat, Polyolefin, wie Polyethylen oder Polypropylen, Polyisobutylen, Polysulfid, Kautschuk, Neopren, Phenolharz, Epoxidharz und Melamin ausgewählt ist. Das Grundgerüst kann dabei linear oder verzweigt (lineares Grundgerüst mit Seitenketten entlang der Kette des Grundgerüstes) aufgebaut sein und enthält terminierend, d.h. als Endgruppen eines linearen Grundgerüstes bzw. als Endgruppen des linearen Grundgerüstes und als Endgruppen der Seitengruppen, alkoxyfunktionelle Silangruppen, bevorzugt mindestens zwei alkoxyfunktionelle Silangruppen.

Die alkoxyfunktionelle Silangruppe hat die allgemeinen Formel (I)

-Si(R¹)ₘ(OR²)₃₋ₘ (I),

worin R¹ für einen linearen oder verzweigten C₁-C₁₆-Alkylrest, bevorzugt für einen Methyl- oder Ethylrest, R² für einen linearen oder verzweigten C₁-C₆-Alkylrest, bevorzugt für einen Methyl- oder Ethylrest, und m für eine ganze Zahl von 0 bis 2, bevorzugt 0 oder 1 steht. Am stärksten bevorzugt sind die mindestens zwei alkoxyfunktionellen Silangruppen di- (m = 1) oder trifunktionell (m = 0) und die Alkoxygruppe ist eine Methoxy- oder Ethoxygruppe.

Die alkoxyfunktionelle Silangruppe ist über eine Linkergruppe an das Grundgerüst des Polymers gebunden. Es kann sich um sogenannte α-Silane (aktiviert durch den α-Effekt) oder um γ-Silane oder um andersartige Silane handeln.

Bevorzugt handelt es sich bei den alkoxysilanfunktionellen Polymeren um einen alkoxysilanfunktionellen Polyether oder ein alkoxysilanfunktionelles Polyurethan. Am stärksten bevorzugt handelt es sich bei den alkoxysilanfunktionellen Polymeren um Polymere, bei denen das Grundgerüst über eine Urethangruppe mit Silangruppen terminiert ist, wie beispielsweise Dimethoxy(methyl)silylmethylcarbamat-terminierte Polyether, Diethoxy(methyl)silyl-methylcarbamat-terminierte Polyether, Trimethoxysilylmethylcarbamat-terminierte Polyether, Triethoxysilylmethylcarbamatterminierte Polyether oder Mischungen aus diesen.

Beispiele geeigneter Polyether und Polyurethane umfassen silanterminierte Polyether (z.B. Geniosil^{®} STP-E 10, Geniosil^{®} STP-E 15, Geniosil^{®} STP-E 30, Geniosil^{®} STP-E 35, Geniosil^{®} XB 502, Geniosil^{®} WP 1 von Wacker Chemie AG, Polymer ST61, Polymer ST75 und Polymer ST77 von Evonik Hanse) und silanterminierte Polyurethane (Desmoseal^{®} S XP 2458, Desmoseal^{®} S XP 2636, Desmoseal^{®} S XP 2749, Desmoseal^{®} S XP 2821 von Bayer, SPUR+*1050MM, SPUR+*1015LM, SPUR+* 3100HM, SPUR+* 3200HM von Momentive), oder SAX015, SAX350, S203H, S303H, oder SAX400 von Kaneka.

Die Viskosität dieser alkoxysilanfunktionellen Polyether und Polyurethane liegt bevorzugt zwischen 0,1 und 50.000 Pa s, stärker bevorzugt zwischen 0,5 und 35.000 Pa s und am stärksten bevorzugt zwischen 0,5 und 30.000 Pa s. Bei diesen Viskositäten sind die Herstellerangaben ausschlaggebend.

Als alternative Polymere, insbesondere Polyether oder Polyurethane können bevorzugt solche verwendet werden, bei denen die alkoxyfunktionellen Silangruppen nicht terminal in das Gerüst des Polyethers oder Polyurethans eingebaut werden, sondern gezielt seitenständig verteilt über die Kette des Grundgerüstes. Über die eingebauten mehreren Vernetzungseinheiten können wichtige Eigenschaften, wie die Vernetzungsdichte, gesteuert werden. Als geeignetes Beispiel kann hier die Produktlinie TEGOPAC^{®} der Evonik Goldschmidt GmbH genannt werden, wie TEGOPAC BOND 150, TEGOPAC BOND 250 und TEGOPAC SEAL 100. In diesem Zusammenhang wird beispielhaft auf die DE 102008000360 A1, die DE 102009028640 A1, die DE102010038768 A1 und die DE 102010038774 A1 und verwiesen.

Je nach Kettenlänge des Grundgerüstes, Alkoxyfunktionalität des Polymers, insbesondere Polyethers oder Polyurethans und Sitz der alkoxyfunktionellen Silangruppen können der Vernetzungsgrad des Bindemittels und somit sowohl die Festigkeit der entstehenden Beschichtung als auch deren elastische Eigenschaften eingestellt werden.

Gewöhnlich beträgt die Menge des Bindemittels 5 bis 60 Gew.-%, bevorzugt 5 bis 50 Gew.-%, stärker bevorzugt 10 bis 40 Gew.-%, bezogen auf die Zusammensetzung.

Erfindungsgemäß enthält die Zusammensetzung Bestandteile, die durch die Bildung einer sich unter Hitzeeinwirkung bildenden, aufgeblähten, isolierenden Schicht aus schwerentflammbaren Material, die das Substrat vor Überhitzung schützt und dadurch die Veränderung der mechanischen und statischen Eigenschaften tragender Bauteile durch Hitzeeinwirkung verhindert oder zumindest verzögert, wirken. Die Bildung einer voluminösen, isolierenden Schicht, nämlich einer Ascheschicht, kann durch die chemische Reaktion eines Gemisches aus entsprechenden aufeinander abgestimmter Verbindungen, die bei Hitzeeinwirkung miteinander reagieren, gebildet werden. Solche Systeme sind dem Fachmann unter dem Begriff chemische Intumeszenz bekannt.

Für die Ausbildung einer intumeszierenden Schicht durch chemische Intumeszenz sind allgemein wenigstens drei Komponenten erforderlich, ein Kohlenstofflieferant, ein Dehydrierungskatalysator und ein Treibmittel. Bei Hitzeeinwirkung erweicht das Bindemittel und die Brandschutzadditive werden freigesetzt, so dass diese im Falle der chemischen Intumeszenz miteinander reagieren oder im Falle der physikalischen Intumeszenz sich aufblähen können. Durch thermische Zersetzung wird aus dem Dehydrierungskatalysator die Säure gebildet, die als Katalysator für die Carbonifizierung des Kohlenstofflieferanten dient. Gleichzeitig zersetzt sich das Treibmittel thermisch unter Bildung inerter Gase, die ein Aufblähen des carbonisierten (verkohlten) Materials und gegebenenfalls das erweichte Bindemittel unter Bildung eines voluminösen, isolierenden Schaums bewirkt.

Daher enthält erfindungsgemäß die Brandschutz-Zusammensetzung mindestens einen flüssigen Kohlenstofflieferanten, mindestens einen Säurebildner und gegebenenfalls mindestens ein Treibmittel.

Der flüssige Kohlenstofflieferant liegt erfindungsgemäß getrennt von dem Bindemittel, also dem alkoxysilanfunktionellen Polymer vor, so dass das Bindemittel und der Kohlenstofflieferant während der Lagerung nicht miteinander in Kontakt kommen und miteinander reagieren können, sondern erst kurz vor oder bei der Anwendung der Brandschutz-Zusammensetzung miteinander in Kontakt kommen. Der flüssige Kohlenstofflieferant kann den einzigen Bestandteil der zweiten Komponente ausmachen.

Erfindungsgemäß ist der flüssige Kohlenstofflieferant aus der Gruppe bestehend aus flüssigen Polyether-Polyolen, flüssigen Polyester-Polyolen, flüssigen glycerinbasierten Polyolen und Mischungen dieser Polyole und flüssigen Epoxid-Verbindungen ausgewählt.

Geeignete Polyole sind aufgebaut aus einem Grundgerüst aus Polyester, Polyether, Polyurethan und/oder Alkanen oder Mischungen aus diesen mit mehr als einer Hydroxylgruppe. Das Grundgerüst kann linear, verzweigt oder zyklisch aufgebaut sein und die funktionellen Hydroxylgruppen terminal und/oder entlang der Kette enthalten.

Hierunter können Polyesterpolyole erwähnt werden, die ausgewählt sind aus Kondensationsprodukten von Di- und Polycarbonsäuren, z.B. aromatische Säuren wie Phthalsäure und Isophthalsäure, aliphatische Säuren wie Adipinsäure und Maleinsäure, cycloaliphatischen Säuren, wie Tetrahydrophthalsäure und Hexahydrophthalsäure, und/oder deren Derivaten, wie Anhydride, Ester oder Chloride, und einer überschüssigen Menge aus mehrfachfunktionellen Alkoholen, z.B. aliphatische Alkohole wie Ethandiol, 1,2-Propandiol, 1,6-Hexandiol, Neopentylglykol, Glycerin, Trimethylolpropan und cycloaliphatische Alkohole wie 1,4-Cyclohexandimethanol.

Ferner können solche Polyesterpolyole erwähnt werden, die ausgewählt sind aus Polyacrylatpolyolen, wie Copolymerisate von Estern der Acryl- und/ oder Methacrylsäure, wie z.B. Ethylacrylat, Butylacrylat, Methylmethacrylat mit zusätzlichen Hydroxylgruppen, und Styrol, Vinylester und Maleinsäureester. Die Hydroxylgruppen in diesen Polymeren werden über funktionalisierte Ester der Acryl- und Methacrylsäure, z.B. Hydroxyethylacrylat, Hydroxyethylmethacrylat und/ oder Hydroxypropylmethacrylat eingeführt.

Weiterhin können solche Polyesterpolyole erwähnt werden, die ausgewählt sind aus Polycarbonatpolyolen. Verwendbare Polycarbonatpolyole sind Hydroxylgruppen aufweisende Polycarbonate, zum Beispiel Polycarbonatdiole. Diese sind durch Reaktion von Kohlensäure oder Kohlensäurederivaten mit Polyolen oder durch die Copolymerisation von Alkylenoxiden, wie zum Beispiel Propylenoxid, mit CO₂ erhältlich. Zusätzlich oder alternativ sind die eingesetzten Polycarbonate aus linearen aliphatischen Ketten aufgebaut. Geeignete Kohlensäurederivate sind etwa Kohlensäurediester, wie z.B. Diphenylcarbonat, Dimethylcarbonat oder Phosgen. Geeignete Polyole sind etwa Diole, wie Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A und lactonmodifizierte Diole der vorstehend genannten Art.

Statt oder zusätzlich zu reinen Polycarbonatdiolen können auch Polyether-Polycarbonatdiole eingesetzt werden.

Weiterhin können die Polyesterpolyole erwähnt werden, die ausgewählt sind unter Polycaprolactonpolyolen, hergestellt durch ringöffnende Polymerisation von ε-Caprolacton mit mehrfachfunktionellen Alkoholen, wie Ethylenglykol, 1,2-Propandiol, Glycerin und Trimethylolpropan.

Weiter können flüssige Polyetherpolyole erwähnt werden, aus an sich bekannten Additionsprodukte von Styroloxid, Ethylenoxid, Propylenoxid, Butylenoxid und/oder Epichlorhydrin an di- oder polyfunktionelle Startermoleküle. Als geeignete Startermoleküle können alle dem Stand der Technik nach bekannten Verbindungen eingesetzt werden, wie zum Beispiel Wasser, Butyldiglykol, Glycerin, Diethylenglykol, Trimethylolpropan, Propylenglykol, Sorbit, Ethylendiamin, Triethanolamin, 1,4-Butandiol, Diethylenglykol und Butyldiglykol.

Ebenfalls geeignete flüssige Polyetherpolyole sind auch biogene Polyole wie_ätherische Öle mit mehreren Hydroxygruppen, Rizinusölderivate, Pflanzenöle, die durch Epoxidierung und

Ringöffnung oder durch Umesterung mit bspw. Glycerin in Polyole umgewandelt werden, Polyole auf der Basis von Soja-, Raps-, Sonnenblumenöl, ebenso wie Polyole hergestellt aus Lignin.

Erwähnt werden können außerdem Polyurethanpolyole, hergestellt aus Polyaddition von Diisocyanaten mit überschüssigen Mengen Di- und/oder Polyolen.

Bevorzugt sind di- oder mehrfunktionelle Alkohole, ausgewählt aus C₂-C₁₀-Alkoholen mit den Hydroxylgruppen an den Enden und/oder entlang der Kette. Beispiele hierfür Ethylenglykol, 1,2- und 1,3- Propandiol, 1,2,3-Propantriol, Butandiole, 2-Methyl-1,3-propandiol, 3-Methyl-1,3-butanediol, Dipropylenglykol, Polyethylenglykol, Polypropylenglykole, Dibutylenglykol, Polybutylenglykole, Polytetramethylenetherglykol.

Besonders bevorzugt sind oben genannte Polyesterpolyole, Polyetherpolyole und C₂-C₁₀-Alkohole, die di- und/oder trifunktionell sind.

Beispiele geeigneter Polyesterpolyole umfassen: DESMOPHEN^{®} 1100, DESMOPHEN^{®} 1652, DESMOPHEN^{®} 1700, DESMOPHEN^{®} 1800, DESMOPHEN^{®} 670, DESMOPHEN^{®} 800, DESMOPHEN^{®} 850, DESMOPHEN^{®} VP LS 2089, DESMOPHEN^{®} VP LS 2249/1, DESMOPHEN^{®} VP LS 2328, DESMOPHEN^{®} VP LS 2388, DESMOPHEN^{®} XP 2488 (Bayer), K-FLEX XM-360, K-FLEX 188, K-FLEX XM-359, K-FLEX A308 und K-FLEX XM-332 (King Industries).

Beispiele geeigneter kommerziell erhältlicher Polyetherpolyole umfassen: ACCLAIM^{®} POLYOL 12200 N, ACCLAIM^{®} POLYOL 18200 N, ACCLAIM^{®} POLYOL 4200, ACCLAIM^{®} POLYOL 6300, ACCLAIM^{®} POLYOL 8200 N, ARCOL^{®} POLYOL 1070, ARCOL^{®} POLYOL 1105 S, DESMOPHEN^{®} 1110 BD, DESMOPHEN^{®} 1111 BD, DESMOPHEN^{®} 1262 BD, DESMOPHEN^{®} 1380 BT, DESMOPHEN^{®} 1381 BT, DESMOPHEN^{®} 1400 BT, DESMOPHEN^{®} 2060 BD, DESMOPHEN^{®} 2061 BD, DESMOPHEN^{®} 2062 BD, DESMOPHEN^{®} 3061 BT, DESMOPHEN^{®} 4011 T, DESMOPHEN^{®} 4028 BD, DESMOPHEN^{®} 4050 E, DESMOPHEN^{®} 5031 BT, DESMOPHEN^{®} 5034 BT und DESMOPHEN^{®} 5035 BT (Bayer) oder Mischungen aus Polyester- und Polyetherpolyolen wie WorléePol 230 (Worlée).

Beispiele geeigneter Alkanole umfassen Ethandiol, Propandiol, Propantriol, Butandiol, Butantriol, Pentandiol, Pentantriol, Hexandiol, Hexantriol, Heptandiol, Heptantriol, Octandiol, Octantriol, Nonandiol, Nonantriol, Decandiol und Decantriol.

Geeignete flüssige Polyole sind diejenigen der oben aufgeführten Polyole, die bei Normalbedingungen (geregelt in DIN 1343) flüssige Stoffe sind.

Beispiele geeigneter kommerziell erhältlicher flüssiger Polyole umfassen:
Polyol 3990, Polyol 3610, Polyol 4800 (Perstorp), Acclaim Polyol 12200 N, Acclaim Polyol 18200 N, Acclaim Polyol 4200, Acclaim Polyol 6300, Acclaim Polyol 8200 N (Covestro), Arcol Polyol 1070, Arcol Polyol 1105 S (Covestro), Desmophen 1100, Desmophen 1200, Desmophen 1300 BA, Desmophen 1300 EA, Desmophen 1300 PR 75 X, Desmophen 1300 X, Desmophen 1380 BT, Desmophen 1388 EA, Desmophen 1400 BT, Desmophen 1400 PR 75% MIBK, Desmophen 1652, Desmophen 1700, Desmophen 1800, Desmophen 2060 BD, Desmophen 5035 BT, Desmophen 5168 T, Desmophen 631 MPA, Desmophen 650 MPA, Desmophen 651 MPA, Desmophen 651 MPA/X, Desmophen 670, Desmophen 670 ZW, Desmophen 670 SN, Desmophen 670 BA, Desmophen 680 BA, Desmophen 670 X, Desmophen 690 MPA, Desmophen 775 XP, Desmophen 800, Desmophen 800 EA, Desmophen 800 MPA, Desmophen 850, Desmophen 881 X, Desmophen C 1100, Desmophen C 1200, Desmophen C 3100 XP, Desmophen C 3200 XP, Desmophen C XP 2716, Desmophen NH 1220, Desmophen NH 1420, Desmophen NH 1520, Desmophen NH 1521, Desmophen PL 800, Desmophen PL 817, Desmophen R 12, Desmophen T 1665 SN/IB, Desmophen T 1775 SN, Desmophen T XP 2374, Desmophen VPLS 2089, Desmophen VPLS 2119, Desmophen VPLS 2249/1, Desmophen VPLS 2279/1, Desmophen VPLS 2328, Desmophen VPLS 2388 (Covestro), Hyperlite Polyol 1629, Hyperlite Polyol 1639, Hyperlite Polyol 1650, Hyperlite Polyol 1674 (Covestro), Multranol (Covestro), Sumiphen (Covestro), Ultracel 2009, Ultracel 2016 (Covestro), Lupranol 1000/1, Lupranol 1000/2, Lupranol 1005/1, Lupranol 1100/1, Lupranol 1200, Lupranol 2004/1, Lupranol 2007/1, Lupranol 2043, Lupranol 2048, Lupranol 2090, Lupranol 2092, Lupranol 2095, Lupranol 2070, Lupranol 2072, Lupranol 2074, Lupranol 2005/1/Balance, Lupranol 1002/1, Lupranol 3402, Lupranol 3508/1, Lupranol 4002/1, Lupranol 4005/1/SC10, Lupranol 4005/1/SC15, Lupranol 4005/1/SC25, Lupranol 4006/1/SC10, Lupranol 4006/1/SC15, Lupranol 4006/1/SC25, Lupranol 4003/1, Lupranol 4010/1/SC15, Lupranol 4010/1/SC25, Lupranol 3300, Lupranol 3422, Lupranol 3422, Lupranol 3423, Lupranol 3423, Lupranol 3424, Lupranol 3504/1, Lupranol 3505/1 (BASF), Lupraphen 1901/1, Lupraphen 2600/2, Lupraphen 2601/1, Lupraphen 2602/1, Lupraphen 2901/1 (BASF), Caradol ED260-02, Caradol ED56-200, Caradol ED28-08, Caradol ED 28-200, Caradol ET36-17, Caradol ET34-08, Caradol ET28-03, Caradol ET48-09, Caradol ET570-02, Caradol ET380-02, Caradol ET250-04, Caradol ET160-01, Caradol EP500-11, Caradol ED260-30, Caradol ED110-30, Caradol ED56-300, Caradol ET380-30, Caradol ET250-30, Caradol ET160-30, ED110-03 (Shell), Voranol 4701, Voranol Voractiv (DOW), Duranol G4672, Duranol T5652 (Asahi Kasei).

Als Epoxidharz geeignet sind sogenannte Polyepoxid-Flüssigharze. Diese weisen eine Glasübergangstemperatur auf, welche üblicherweise unterhalb von 25°C liegt, im Unterschied zu den sogenannten Festharzen, welche eine Glasübergangstemperatur oberhalb von 25°C aufweisen und sich zu bei 25°C schüttfähigen Pulvern zerkleinern lassen. Diese werden auf bekannte Art und Weise erhalten, zum Beispiel aus der Oxidation der entsprechenden Olefine oder aus der Reaktion von Epichlorhydrin mit den entsprechenden Polyolen, Polyphenolen oder Aminen. Grundlegende Informationen zu und Beispiele für Epoxidharze sind dem Kapitel "Epoxy Resins" der Encyclopedia of Polymer Sciences and Technology, Vol. 9, Wiley-Interscience, 2004, zu entnehmen. Als geeignete Epoxidharze seien beispielhaft erwähnt Reaktionsprodukte von Polyhydroxyverbindungen, insbesondere mehrwertige Phenole oder Phenol-Aldehyd-Kondensate, mit Epihalogenhydrinen oder deren Vorläufern, insbesondere:
a) Reaktionsprodukte von Epichlorhydrin mit Bisphenol A, F und S;
b) Epoxy-Novolake auf Phenol- oder Cresolbasis;
c) Aromatische Glycidylaminharze;
d) Epoxidharze ohne aromatische Struktureinheiten;
sowie Gemische zweier oder mehrerer derartiger Epoxidharze in beliebigem Verhältnis und in beliebigen Reinheitsgraden, mit der Maßgabe, dass die Harze flüssig sind.

Geeignete Verbindungen sind die Glycidylisierungsprodukte von:
- Dihydroxybenzol-Derivaten wie Resorcin, Hydrochinon und Brenzkatechin;
- weiteren Bisphenolen oder Polyphenolen wie Bis-(4-hydroxy-3-methylphenyl)-methan, 2,2-Bis-(4-hydroxy-3-methylyphenyl)-propan (Bisphenol-C), Bis-(3,5-dimethyl-4-hydroxyphenyl)-methan, 2,2-Bis-(3,5-dimethyl-4-hydroxyphenyl)-propan, 2,2-Bis-(3,5-dibromo-4-hydroxyphenyl)-propan, 2,2-Bis-(4-hydroxy-3-tert.-butylphenyl)-propan, 2,2-Bis-(4-hydroxyphenyl)-butan (Bisphenol-B), 3,3-Bis-(4-hydroxyphenyl)-pentan, 3,4-Bis-(4-hydroxyphenyl)-hexan, 4,4-Bis-(4-hydroxyphenyl)-heptan, 2,4-Bis-(4-hydroxyphenyl)-2-methylbutan, 2,4-Bis-(3,5-dimethyl-4-hydroxyphenyl)-2-methylbutan, 1,1-Bis-(4-hydroxyphenyl)-cyclohexan (Bisphenol-Z), 1,1-Bis-(4-hydroxyphenyl)-3,3,5-trimethylcyclohexan (Bisphenol-TMC), 1,1-Bis-(4-hydroxyphenyl)-1-phenyl-ethan, 1,4-Bis[2-(4-hydroxyphenyl)-2-propyl]-benzol) (Bisphenol-P), 1,3-Bis-[2-(4-hydroxyphenyl)-2-propyl]-benzol) (Bisphenol-M), 4,4'-Dihydroxydiphenyl (DOD), 4,4'-Dihydroxybenzophenon, Bis-(2-hydroxynaphth-1-yl)-methan, Bis-(4-hydroxynaphth-1-yl)-methan 1,5-Dihydroxynaphthalin, Tris-(4-hydroxyphenyl)-methan, 1,1,2,2-Tetrakis-(4-hydroxyphenyl)-ethan Bis-(4-hydroxyphenyl)-ether, Bis-(4-hydroxyphenyl)sulfon;
- Kondensationsprodukten von Phenolen mit Formaldehyd, die unter sauren Bedingungen erhalten werden, wie Phenol-Novolaken oder Kresol-Novolaken, auch Bisphenol-F-Novolake genannt;
- aromatischen Aminen, wie Anilin, Toluidin, 4-Aminophenol, 4,4'-Methylendiphenyldiamin (MDA), 4,4'-Methylendiphenyldi-(N-methyl)-amin, 4,4'-[1,4-Phenylen-bis-(1-methyl-ethyliden)]-bisanilin (Bisanilin-P), 4,4'-[1,3-Phenylen-bis-(1-methyl-ethyliden)]-bisanilin (Bisanilin-M);
- sowie Gemische zweier oder mehrerer derartiger Epoxidharze in beliebigem Verhältnis und in beliebigen Reinheitsgraden.

Weiter geeignet sind Reaktionsprodukte von Epichlorhydrin mit Bisphenol A mit einem Epoxidäquivalentmasse (EEW) ≤ 550 g/Val; Reaktionsprodukte von Epichlorhydrin mit Bisphenol F, dem einfachsten Vertreter der Novolake, mit einem EEW ≤ 500 g/Val; beliebige Gemische dieser beiden Reaktionsprodukte, Reaktionsprodukte eines beliebigen Gemisches von Bisphenol A und Bisphenol F mit Epichlorhydrin, Epoxidharze wie Hydantoin-basierte Epoxidharze oder Diglycidylether von hydriertem Bisphenol A oder Bisphenol F; sowie Gemische zweier oder mehrerer derartiger Epoxidharze in beliebigem Verhältnis und in beliebigen Reinheitsgraden.

Darunter bevorzugt sind Reaktionsprodukte von Epichlorhydrin mit Bisphenol A mit einem EEW ≤ 330 g/Val; Reaktionsprodukte von Epichlorhydrin mit Bisphenol F, dem einfachsten Vertreter der Novolake, mit einem EEW ≤ 300 g/Val, beliebige Gemische dieser beiden Reaktionsprodukte, Reaktionsprodukte eines beliebigen Gemisches von Bisphenol A und Bisphenol F mit Epichlorhydrin mit einem EEW ≤ 330 g/Val, 5,5-Dimethyl-1,3-bis(2,3-epoxypropyl)-2,4-imidazolidindion; 2,2-Bis[4-(2,3-epoxypropoxy)-cyclohexyl]propan; sowie Gemische zweier oder mehrerer derartiger Epoxidharze in beliebigem Verhältnis und in beliebigen Reinheitsgraden.

Weiter bevorzugt sind Reaktionsprodukte von Epichlorhydrin mit Bisphenol A mit einem EEW ≤ 200 g/Val, wie beispielsweise Epilox^{®} A 17-01, Epilox^{®} A 18-00, Epilox^{®} A 19-00, Epilox^{®} A 19-02, Epilox^{®} A 19-03 oder Epilox^{®} A 19-04 der Leuna-Harze GmbH, dargestellt durch die nachfolgende Formel, worin 0 ≤ n ≤ 0,2;

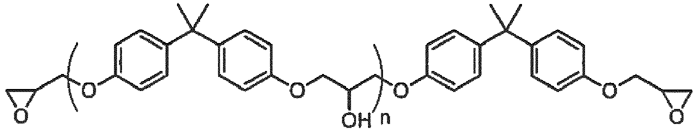

Reaktionsprodukte von Epichlorhydrin mit Bisphenol F, dem einfachsten Vertreter der Novolake, mit einem EEW s 185 g/Val, wie beispielsweise Epilox^{®} F 16-01 oder Epilox^{®} F 17-00 der Leuna-Harze GmbH, dargestellt durch die nachfolgende Formel, worin 0 ≤ n ≤ 0,2; 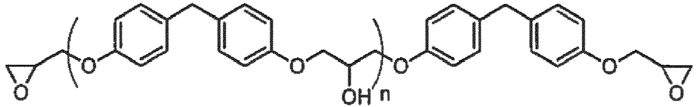 sowie Gemische zweier oder mehrerer derartiger Epoxidharze in beliebigem Verhältnis und in beliebigen Reinheitsgraden, wie beispielsweise Epilox^{®} AF 18-30, Epilox^{®} 18-50 oder Epilox^{®} T 19-27 der Leuna-Harze GmbH, sowie Reaktionsprodukte eines beliebigen Gemisches von Bisphenol A und Bisphenol F mit Epichlorhydrin mit einem EEW ≤ 200 g/Val.

Als Epoxidharz eignet sich auch ein aliphatisches oder cycloaliphatisches Polyepoxid, wie beispielsweise:
- ein Glycidylether eines gesättigten oder ungesättigten, verzweigten oder unverzweigten, zyklischen oder offenkettigen C₂- bis C₃₀-Diols, wie beispielsweise Ethylenglykol, Propylenglykol, Butylenglykol, Hexandiol, Octandiol, ein Polypropylenglykol, Dimethylolcyclohexan, Neopentylglykol oder Dibromoneopentylglykol;
- ein Glycidylether eines tri- oder tetrafunktionellen, gesättigten oder ungesättigten, verzweigten oder unverzweigten, zyklischen oder offenkettigen Polyols wie Rizinusöl, Trimethylolpropan, Trimethylolethan, Pentaerythritol, Sorbit oder Glycerin, sowie alkoxyliertes Glycerin oder alkoxyliertes Trimethylolpropan;
- ein hydriertes Bisphenol-A-, -F- oder -A/F-Flüssigharz, beziehungsweise die Glycidylisierungsprodukte von hydriertem Bisphenol-A, -F oder -A/F;
- ein N-Glycidylderivat von Amiden oder heterozyklischen Stickstoffbasen, wie Triglycidylcyanurat und Triglycidylisocyanurat, sowie Umsetzungsprodukte von Epichlorhydrin und Hydantoin.

Als Epoxidharz eignen sich schließlich auch Epoxidharze aus der Oxidation von Olefinen, beispielsweise aus der Oxidation von Vinylcylohexen, Dicyclopentadien, Cyclohexadien, Cyclododecadien, Cyclododecatrien, Isopren, 1,5-Hexadien, Butadien, Polybutadien oder Divinylbenzol.

Neben dem flüssigen Kohlenstofflieferanten können zusätzlich noch andere, bei Raumtemperatur nicht flüssige, Kohlenstofflieferanten (weiterer zusätzlicher Kohlenstofflieferant) verwendet werden. Die festen Verbindungen sind vorzugsweise in dem erfindungsgemäß vorhandenen flüssigen Kohlenstofflieferanten löslich, so dass diese zusammen eine homogene Phase bilden. Es kann aber auch eine Suspension vorliegen.

Als weitere zusätzliche bei Raumtemperatur nicht flüssige Kohlenstofflieferanten kommen zunächst die in intumeszierenden Flammschutzmitteln üblicherweise verwendeten und dem Fachmann bekannten, festen Verbindungen in Betracht, wie stärkeähnliche Verbindungen, z.B. Stärke und modifizierte Stärke, und/oder mehrwertige Alkohole (Polyole), wie Saccharide und Polysaccharide und/oder ein thermoplastisches oder duroplastisches polymeres Harzbindemittel, wie ein Phenolharz, ein Harnstoffharz, ein Polyurethan, Polyvinylchlorid, Poly(meth)acrylat, Polyvinylacetat, Polyvinylalkohol, ein Silikonharz und/oder einen Kautschuk. Geeignete Polyole sind Polyole aus der Gruppe Zucker, Pentaerythrit, Dipentaerythrit, Tripentaerythrit, Polyvinylacetat, Polyvinylalkohol, Sorbitol, EO-PO-Polyole.

Als Dehydrierungskatalysatoren bzw. Säurebildner kommen die in intumeszierenden Brandschutzformulierungen üblicherweise verwendeten und dem Fachmann bekannten Verbindungen in Betracht, wie ein Salz oder ein Ester einer anorganischen, nicht flüchtigen Säure, ausgewählt unter Schwefelsäure, Phosphorsäure oder Borsäure. Im Wesentlichen werden phosphorhaltige Verbindungen eingesetzt, deren Palette sehr groß ist, da sie sich über mehrere Oxidationsstufen des Phosphors erstrecken, wie Phosphine, Phosphinoxide, Phosphoniumverbindungen, Phosphate, elementarer roter Phosphor, Phosphite und Phosphate. Als Phosphorsäureverbindungen können beispielhaft erwähnt werden: Monoammoniumphosphat, Diammoniumphosphat, Ammoniumphosphat, Ammoniumpolyphosphat, Melaminphosphat, Melaminharzphosphate, Kaliumphosphat, Polyolphosphate wie etwa Pentaerythritphosphat, Glyzerinphosphat, Sorbitphosphat, Mannitphosphat, Dulcitphosphat, Neopentylglykolphosphat, Ethylenglykolphosphat, Dipentaerythritphosphat und dergleichen. Bevorzugt wird als Phosphorsäureverbindung ein Polyphosphat oder ein Ammoniumpolyphosphat eingesetzt. Unter Melaminharzphosphaten sind dabei Verbindungen wie Umsetzungsprodukte aus Lamelite C (Melamin-FormaldehydHarz) mit Phosphorsäure zu verstehen. Als Schwefelsäureverbindungen können beispielhaft erwähnt werden: Ammoniumsulfat, Ammoniumsulfamat, Nitroanilinbisulfat, 4-Nitroanilin-2-sulfonsäure und 4,4-Dinitrosulfanilamid und dergleichen. Als Borsäureverbindung kann Melaminborat beispielhaft erwähnt werden.

Sofern die Brandschutz-Zusammensetzung ein Treibmittel enthält, kommen die üblicherweise in Brandschutz-Zusammensetzungen verwendeten und dem Fachmann bekannten Verbindungen in Betracht, wie Cyanursäure oder Isocyansäure und deren Derivate, Melamin und deren Derivate. Solche sind Cyanamid, Dicyanamid, Dicyandiamid, Guanidin und dessen Salze, Biguanid, Melamincyanurat, Cyansäuresalze, Cyansäureester und -amide, Hexamethoxymethylmelamin, Dimelaminpyrophosphat, Melaminpolyphosphat, Melaminphosphat. Bevorzugt wird Hexamethoxymethylmelamin oder Melamin (Cyanursäureamid) eingesetzt.

Geeignet sind ferner Verbindungen, die ihre Wirkungsweise nicht auf eine einzige Funktion beschränkt, wie Melaminpolyphosphat, das sowohl als Säurebildner als auch als Treibmittel wirkt. Weitere Beispiele sind in der GB 2 007 689 A1, EP 139 401 A1 und US-3 969 291 A1 beschrieben.

Die dämmschichtbildenden Additive, d.h. der Dehydrierungskatalysator, der flüssige Kohlenstofflieferant und gegebenenfalls das Treibmittel, können zusammen in einer Menge von 30 bis 99 Gew.-% in der Zusammensetzung enthalten sein, wobei die Menge im Wesentlichen von der Applikationsform der Zusammensetzung (Sprühen, Pinseln und dergleichen) abhängt. Um einen möglichst hohe Brandwiderstand zu erreichen, wird der Anteil des dämmschichtbildenden Brandschutzadditives in der Gesamtformulierung so hoch wie möglich eingestellt. Bevorzugt beträgt sein Anteil in der Gesamtformulierung 35 bis 85 Gew.-% und besonders bevorzugt 40 bis 85 Gew.-%.

Die durch die chemische Intumeszenz hervorgerufene voluminöse, isolierende Schicht kann durch physikalische Intumeszenz unterstützt werden. Beide Systeme können in Kombination miteinander erfindungsgemäß eingesetzt werden.

In einer Ausführungsform der Erfindung, in der die isolierende Schicht zusätzlich durch physikalische Intumeszenz gebildet wird, umfasst die Brandschutz-zusammensetzung ferner mindestens eine thermisch expandierbare Verbindung, wie eine Graphit-Interkalationsverbindung, die auch als Blähgraphit bekannt sind. Diese können ebenfalls sowohl im Bindemittel, insbesondere homogen, als auch in dem flüssigen Kohlenstofflieferanten enthalten sein.

Als Blähgraphit kommen beispielsweise bekannte Einlagerungsverbindungen von SOₓ, NOₓ, Halogen und/oder starken Säuren in Graphit in Frage. Diese werden auch als Graphitsalze bezeichnet. Bevorzugt sind Blähgraphite, die bei Temperaturen von beispielsweise 120 bis 350°C unter Aufblähen SO₂, SOs, NO und/oder NO₂ abgeben. Der Blähgraphit kann beispielsweise in Form von Plättchen mit einem maximalen Durchmesser im Bereich von 0,1 bis 5 mm vorliegen. Vorzugsweise liegt dieser Durchmesser im Bereich 0,5 bis 3 mm. Für die vorliegende Erfindung geeignete Blähgraphite sind im Handel erhältlich. Im Allgemeinen sind die Blähgraphitteilchen in den erfindungsgemäßen Brandschutzelementen gleichmäßig verteilt. Die Konzentration an Blähgraphitteilchen kann aber auch punktuell, musterartig, flächig und/oder sandwichartig variiert sein. In dieser Hinsicht wird Bezug genommen auf die EP 1489136 A1.

Da die im Brandfall gebildete Aschekruste in der Regel zu instabil ist und abhängig von deren Dichte und Struktur etwa durch Luftströmungen verblasen werden kann, was sich negativ auf die isolierende Wirkung der Beschichtung auswirkt, wird zu den eben aufgeführten Komponenten bevorzugt mindestens ein Aschekrustenstabilisator gegeben.

In einer weiteren Ausführungsform der Erfindung umfasst die Brandschutz-Zusammensetzung daher ferner mindestens einen anorganischen Gerüstbildner. Die Komponenten des Additivs werden bevorzugt so ausgewählt, dass sie einen Synergismus entwickeln können, wobei einige der Verbindungen mehrere Funktionen erfüllen können.

Als Aschekrustenstabilisatoren bzw. Gerüstbildner kommen die üblicherweise in Brandschutzformulierungen verwendeten und dem Fachmann bekannten Verbindungen in Betracht, beispielsweise Blähgraphit und teilchenförmige Metalle, wie Aluminium, Magnesium, Eisen und Zink. Das teilchenförmige Metall kann in Form eines Pulvers, von Plättchen, Schuppen, Fasern, Fäden und/oder Whiskers vorliegen, wobei das teilchenförmige Metall in Form von Pulver, Plättchen oder Schuppen eine Teilchengrösse von ≤50 µm, vorzugsweise von 0,5 bis 10 µm besitzt. Im Fall der Verwendung des teilchenförmigen Metalls in Form von Fasern, Fäden und/oder Whiskers ist eine Dicke von 0,5 bis 10 µm und eine Länge von 10 bis 50 µm bevorzugt. Als Aschekrustenstabilisator kann alternativ oder zusätzlich ein Oxid oder eine Verbindung eines Metalls, bevorzugt aus der Aluminium, Magnesium, Eisen, Titan oder Zink umfassenden Gruppe eingesetzt werden, insbesondere Eisenoxid, vorzugsweise Eisentrioxid, Titandioxid, ein Borat, wie Zinkborat und/oder eine Glasfritte aus niedrig schmelzenden Gläsern mit einer Schmelztemperatur von vorzugsweise bei oder oberhalb 400°C, Phosphat- oder Sulfatgläsern, Melaminpolyzinksulfaten, Ferrogläsern oder Calziumborosilikaten. Die Zugabe eines solchen Aschekrustenstabilisators trägt zu einer wesentlichen Stabilisierung der Aschekruste im Brandfall bei, da diese Additive die mechanische Festigkeit der intumeszierenden Schicht erhöhen und/oder deren Abtropfen verhindern. Beispiele derartiger Additive finden sich auch in US 4 442 157 A, US 3 562 197 A, GB 755 551 A sowie EP 138 546 A1.

Ferner können auch Fasern, wie etwa Mineralfasern, Carbonfasern oder Glasfasern als Aschekrustenstabilisatoren verwendet werden.

Daneben können Aschekrustenstabilisatoren wie Melaminphosphat oder Melaminborat enthalten sein.

Optional können der erfindungsgemäßen Zusammensetzung ein oder mehrere reaktive Flammhemmer zugesetzt werden. Ein Beispiel im Sinne der Erfindung sind reaktive Organophosphorverbindungen, wie 9,10-Dihydro-9-oxa-10-phosphaphenanthren-10-oxid (DOPO) und dessen Derivate und Addukte. Solche Verbindungen sind beispielsweise beschrieben in S. V Levchik, E. D Weil, Polym. Int. 2004, 53, 1901-1929 oder E. D. Weil, S. V. Levchik (Hrsg.), Flame Retardants for Plastics and Textiles - Practical Applications, Hanser, 2009.

Die erfindungsgemäße Brandschutz-Zusammensetzung härtet durch Feuchtigkeit aus. Dementsprechend beginnt die Aushärtung der Zusammensetzung an der Oberfläche.

Diese Art der Aushärtung hängt von der Luftfeuchtigkeit und von der Schichtdicke ab. Um lange Aushärtezeiten zu vermeiden oder eine Aushärtung in sehr trockener Umgebung zu gewährleisten enthält die erfindungsgemäße Brandschutz-Zusammensetzung in einer bevorzugten Ausführungsform daher ein Vernetzungsmittel als weiteren Bestandteil, wobei Wasser als Vernetzungsmittel besonders bevorzugt ist. Hierdurch kann insbesondere eine homogenere und schnellere Durchhärtung des Bindemittels erreicht werden, auch verglichen mit einer Zusammensetzung gemäß der WO 2010/131037 A1. Die Aushärtung der Zusammensetzung wird somit weitgehend unabhängig von der absoluten Luftfeuchtigkeit und die Zusammensetzung härtet auch unter extrem trockenen Bedingungen zuverlässig und schnell aus.

Der Wassergehalt in der Zusammensetzung kann bis zu 5 Gew.-%, bezogen auf das Polymer, betragen, wobei ein Gehalt im Bereich zwischen 0,1 und 5 Gew.-% bevorzugt, zwischen 0,5 und 3 Gew.-% stärker bevorzugt und zwischen 0,6 und 2 Gew.-% noch stärker bevorzugt ist.

Weiter geeignete Vernetzungsmittel sind ein vinylfunktionelles Alkoxysilan, ein oligomeres amino-/alkylfunktionelles Alkoxysilan, ein oligomeres aminofunktionelles Alkoxysilan, ein aminofunktionelles Alkoxysilan, ein alkylfunktionelles Alkoxysilan, ein epoxyfunktionelles Alkoxysilan, ein vinylfunktionelles Alkoxysilan, ein vinyl-/alkylfunktionelles Alkoxysilan, ein mercaptofunktionelles Alkoxysilan, ein methacrylfunktionelles Alkoxysilan oder ein Kieselsäureester.

Beispiele davon sind Methyltrimethoxysilan, Chlormethyltrimethoxysilan, Ethyltrimethoxysilan, Propyltrimethoxysilan, Vinyltrimethoxysilan, Methyltriethoxysilan, Vinyltriethoxysilan, Phenyltriethoxysilan, Methyltripropoxysilan, Phenyltripropoxysilan, Tetramethoxysilan, Tetraethoxysilan, Tetra-n-propoxysilan, Tetra-n-butoxysilan, Methyltris(methylethylketoxim)silan, Phenyltris(methylethylketoxim)silan, Vinyltris(methylethylketoxim)silan, Methyltris(methylisobutylketoxim)silan, Methyltris(methylpropylketoxim)silan oder Tetra(methylethylketoxim)silan, Aminopropyltrimethoxysilan, Aminopropyltriethoxysilan, Aminopropylmethyldimethoxysilan, Aminopropylmethyldiethoxysilan, *N*-(2-Aminoethyl)-aminopropyltrimethoxysilan, *N*-(2-Aminoethyl)aminopropyltrimethoxysilan, *N*-(2-Aminoethyl)-aminopropyltriethoxysilan, *N*-(2-Aminoethyl)-aminopropyl-methyldimethoxysilan, *N*-Cyclohexylaminomethyltriethoxysilan, N-Cyclohexyl-aminomethyl-methyldiethoxysilan, *N*-Cyclohexylaminomethyltrimethoxysilan, *N*-Cyclohexylaminomethyl-methyldimethoxysilan, Hexadecyltrimethoxysilan, *iso*-Butyltriethoxysilan, *iso*-Butyltrimethoxysilan, Octyltrichlorosilan, Octyltriethoxysilan, Propyltriethoxysilan, , Bis(3-triethoxysilylpropyl)amin, Bis(3-trimethoxysilylpropyl)amin, 3- 3-2-Aminoethyl-3-aminopropylmethyldimethoxysilan, 2-Aminoethyl-3-amino-propyltrimethoxysilan, 3-Glycidyloxypropyltriethoxysilan, 3-Glycidyloxypropyltrimethoxysilan, 3-Mercaptoprobyltrimethoxysilan, 3-Methacryloxypropyltrimethoxysilan, Methacryloxymethylmethyldimethoxysilan, Methacryloxymethyl-timethoxysilan, 3-Methacryloxypropyltriacetoxysilan, Ethylpolysilicat, Tetraethylorthosilicat, Tetramethylorthosilicat, Tetra-n-Propylorthosilicat, Vinyltrichlorsilan, Vinyltriacetoxysilan, Vinyltris(2-methoxyethoxy)silan, Cyclohexyl-3-aminopropyltrimethoxysilan, N-(2-Aminoethyl)-3-aminopropyltrimethoxysilan, 3-(2-Aminomethylamino)propyltriethoxysilan, N-(2-Aminoethyl)-3-amino-prolymmethyldimethoxysilan, 3-Ureidopropyltrimethoxysilan, N-Methyl[3-(Trimethoxysilyl)propyl]carbamat, *N*-Trimethoxysilylmethyl-*O*-methylcarbamat, N-Dimethoxy(methyl)silyl-methyl-O-methylcarbamat, Tris-[3-(trimethoxysilyl)propyl]-isocyanurat oder Kombinationen aus diesen.

Kommerziell erhältliche Beispiele hierfür sind: Dynasylan^{®} 1146, Dynasylan^{®} 6490, Dynasylan^{®} 6498, Dynasylan^{®} SIVO 210, Dynasylan^{®} SIVO 214, Dynasylan^{®} 9116, Dynasylan^{®} IBTEO, Dynasylan^{®} IBTMO, Dynasylan^{®} MTES, Dynasylan^{®} MTMS, Dynasylan^{®} OCTCS, Dynasylan^{®} OCTEO, Dynasylan^{®} OCTMO, Dynasylan^{®} PTEO, Dynasylan^{®} PTMO, Dynasylan^{®} 1122, Dynasylan^{®} 1124, Dynasylan^{®} 1133, Dynasylan^{®} 1204, Dynasylan^{®} 1505, Dynasylan^{®} 1506, Dynasylan^{®} AMEO, Dynasylan^{®} AMEO-T, Dynasylan^{®} AMMO, Dynasylan^{®} 1411, Dynasylan^{®} DAMO, Dynasylan^{®} DAMO-T, Dynasylan^{®} GLYEO, Dynasylan^{®} GLYMO, Dynasylan^{®} MTMO, Dynasylan^{®} MEMO, Dynasylan^{®} 40, Dynasylan^{®} A, Dynasylan^{®} M, Dynasylan^{®} P, Dynasylan^{®} VTC, Dynasylan^{®} VTEO, Dynasylan^{®} VTMO, Dynasylan^{®} VTMOEO, Dynasylan^{®} 6598 (jeweils der Evonik Industries AG), Geniosil^{®} GF9, Geniosil^{®} GF 91, Geniosil^{®} GF 92, Geniosil^{®} XL 926, Geniosil^{®} GF 93, Geniosil^{®} GF 94, Geniosil^{®} GF 95, Geniosil^{®} GF 96, Geniosil^{®} GF 98, Geniosil^{®} XL 10, Geniosil^{®} XL 12, Geniosil^{®} GF 56, Geniosil^{®} GF 62, Geniosil^{®} GF 31, Geniosil^{®} XL 32, Geniosil^{®} XL 33, Geniosil^{®} GF 39, Geniosil^{®} GF 60, Geniosil^{®} XL 63, Geniosil^{®} XL 65, Geniosil^{®} GF 69, Geniosil^{®} GF 80 und Geniosil^{®} GF 82 (jeweils der Wacker Chemie AG).

Vernetzungsmittel sind bevorzugt in einer Menge von 0,05 bis 5,0 Gew.-%, bezogen auf die gesamte Zusammensetzung, stärker bevorzugt von 0,1 bis 3,0 Gew.-% und am stärksten bevorzugt von 0,5 bis 2,0 Gew.-%, enthalten.

Durch das Vernetzungsmittel können verschiedene Eigenschaften, wie Haftung zum Untergrund, bessere Benetzung der Additive und Aushärtungsgeschwindigkeit der Zusammensetzung gezielt optimiert und maßgeschneidert werden.

Weiterhin können die Vernetzungsmittel auch bereits teilweise oder vollständig hydrolysiert vorliegen. Aufgrund der stark erhöhten Reaktivität von teilweise oder vollständig hydrolysierten Silanen kann ihr Einsatz als Vernetzungsmittel vorteilhaft sein. Dem Fachmann ist dabei bekannt, dass es beim Einsatz von teilweise oder vollständig hydrolysierten Silanen zur Bildung von oligomeren Siloxanen, insbesondere zu Dimeren und/oder Trimeren, kommen kann, welche durch Kondensation von hydrolysierten Silanen gebildet werden.

Besonders bevorzugte oligomere Siloxane sind beispielsweise Hexamethoxydisiloxan, Hexaethoxydisiloxan, Hexa-n-propoxydisiloxan, Hexa-n-butoxydisiloxan, Octaethoxytrisiloxan, Octa-n-butoxytrisiloxan, Decaethoxytetrasiloxan.

Selbstverständlich können als Vernetzungsmittel für die Organopolysiloxane auch beliebige Mischungen der vorhergehend genannten Silane eingesetzt werden.

In einer bevorzugten Ausführungsform enthält die Bradnschutz-Zusammensetzung ein oder mehrere Co-Vernetzungsmittel als weiteren Bestandteil. Das Co-Vernetzungsmittel kann dabei aus der Gruppe an Vernetzungsmittel, wie sie oben beschrieben ist, oder Wasser ausgewählt werden, wobei Wasser als Co-Vernetzungsmittel besonders bevorzugt ist. Hierdurch kann eine homogenere und schnellere Durchhärtung des Bindemittels erreicht werden. Die Aushärtung der Zusammensetzung wird somit weitgehend unabhängig von der absoluten Luftfeuchtigkeit und die Zusammensetzung härtet auch unter extrem trockenen Bedingungen zuverlässig und schnell aus.

Der Gehalt an Co-Vernetzungsmittel, bevorzugt Wasser, in der Zusammensetzung kann bis zu 5 Gew.-%, bezogen auf das Polymer, betragen, wobei ein Gehalt im Bereich zwischen 0,1 und 5 Gew.-% bevorzugt, zwischen 0,5 und 3 Gew.-% stärker bevorzugt und zwischen 0,6 und 2 Gew.-% noch stärker bevorzugt ist.

In einer Ausführungsform enthält die erfindungsgemäße Brandschutz-Zusammensetzung ferner mindestens einen weiteren Bestandteil, ausgewählt unter Weichmachern, Wasserfängern, organischen und/oder anorganischen Zuschlagstoffen und/oder weiteren Additiven enthält.

Geeignete Weichmacher sind unter Derivaten der Benzoesäure, Phthalsäure, z.B. Phthalate, wie Dibutyl-, Dioctyl-, Dicyclohexyl-, Diisooctyl-, Diisodecyl-, Dibenzyl- oder Butylbenzylphthalat, Trimellitsäure, Pyromellitsäure, Adipinsäure, Sebacinsäure, Fumarsäure, Maleinsäure, Itaconsäure, Caprylsäure und Zitronensäure, Alkylphosphatestern und Derivaten von Polyestern und Polyethern, epoxidierten Ölen, C_{1Q}-C₂₁-Alkylsulfonsäureestern des Phenols, Polyestern, erhältlich aus linearen oder verzweigten, gesättigten oder ungesättigten C₆-C₂₁-Monocarbonsäuren und multifunktionellen Alkoholen bzw. deren ethoxylierten Derivaten, und alizyklischen Carbonsäureestern ausgewählt. Bevorzugt ist der Weichmacher ein Esterderivat der Terephthalsäure, ein Triol-Ester der Caprylsäure, ein Glykoldiester, Diol-Ester aliphatischer Dicarbonsäuren, Esterderivat der Zitronensäure, sekundärer Alkylsulfonsäureester, Esterderivate des Glycerins mit Epoxidgruppen und Esterderivate der Phosphate. Am stärksten bevorzugt ist der Weichmacher Bis(2-ethylhexyl)terephthalat, Trihydroxymethylpropylcaprylat, Triethylenglycol-bis(2-ethylhexanoat), 1,2-Cyclohexandicarboxylsäure-diisononylester, ein Gemisch aus 75-85 % sekundärer Alkylsulfonsäureester, 15-25 % sekundärer Alkandisulfonsäurediphenylester sowie 2-3 % nicht sulfonierter Alkane, Triethylcitrat, epoxidiertes Sojabohnenöl, Tri-2-ethylhexylphosphat oder ein Gemisch aus *n*-Octyl- und *n*-Decylsuccinat.

Kommerziell erhältliche Beispiele für Weichmacher sind Eastman^{®} DOTP Plasticizer (Eastman Chemical Company), Esterex^{®} NP 343 (Excon Mobil Corporation), Solusolv^{®} 2075 (Solutia Inc.), Hexamoll^{®} DINCH (BASF SE), Mesamoll^{®} II (Lanxess Deutschland GmbH), Triethylcitrat (Sigma Aldrich), Paraplex^{®} G-60 (Hallstar Company), Disflammol^{®} TOF (Lanxess Deutschland GmbH) und Uniplex^{®} LXS TP ODS (Lanxess Deutschland GmbH).

In der Zusammensetzung kann der Weichmacher bevorzugt in einer Menge von 0,1 bis 40 Gew.-%, stärker bevorzugt 1 bis 35 Gew.-% und noch stärksten bevorzugt 5 bis 25 Gew.-%, bezogen auf die gesamte Zusammensetzung, enthalten sein.

Um eine vorzeitige Reaktion des alkoxysilanfunktionellen Polymers mit Restfeuchtigkeit aus gegebenenfalls in der Zusammensetzung enthaltenen Bestandteilen, insbesondere Füllstoffen und/oder Additiven, oder der Luftfeuchtigkeit zu verhindern, werden der Zusammensetzung üblicherweise Wasserfänger zugesetzt, wobei der Wasserfänger zusammen mit dem alkoxysilanfunktionellen Polymer gelagert wird. Dadurch wird in die Formulierungen, insbesondere die Polymerkomponente eingetragene Feuchtigkeit abgefangen. Es ist nicht notwendig, dass der flüssige Kohlenstofflieferant einen Wasserfänger enthält, d.h. dass die Komponente, die den flüssigen Kohlenstofflieferanten enthält, zusätzliche einen Wasserfänger enthält.

Bevorzugt ist der Wasserfänger ein organofunktionelles Alkoxysilan oder ein oligomeres organofunktionelles Alkoxysilan, stärker bevorzugt ein vinylfunktionelles Alkoxysilan, ein oligomeres vinylfunktionelles Alkoxysilan, ein vinyl-/alkylfunktionelles Alkoxysilan, ein oligomeres amino-/alkylfunktionelles Alkoxysilan, ein acetoxy-Zalkylfunktionelles Alkoxysilan, ein aminofunktionelles Alkoxysilan, ein oligomeres aminfunktionelles Alkoxysilan, ein Carbamatosilan oder ein methacryloxyfunktionelles Alkoxysilan. Am stärksten bevorzugt ist der Wasserfänger Di-tert-butoxydiacetoxysilan, Bis(3-triethoxysilylpropyl)amin, Bis(3-trimethoxypropyl)amin, 3-Aminopropylmethyldiethoxysilan, 3-Aminopropyltriethoxysilan, Vinyltriethoxysilan, Vinyltrimethoxysilan, Vinyltris(2-methoxyethoxy)silan, *N*-Cyclohexylaminomethyltriethoxysilan, Vinyldimethoxymethylsilan, Vinyltriacetoxysilan, 3-Methacryloxypropyltrimethoxysilan, Methacryloxymethylmethyldimethoxysilan, Methacryloxymethyltrimethoxysilan, 3-Methacryloxypropyltriacetoxysilan, *N*-Methyl[3-(Trimethoxysilyl)propyl]carbamat, *N-*Trimethoxysilylmethyl-O-methylcarbamat, *N*-Dimethoxy(methyl)silyl-methyl-O-methylcarbamat oder Kombinationen aus diesen.

Kommerziell erhältliche Beispiele hierfür sind: Dynasylan^{®} 1146, Dynasylan^{®} 6490, Dynasylan^{®} 6498, Dynasylan^{®} BDAC, Dynasylan^{®} 1122, Dynasylan^{®} 1124, Dynasylan^{®} 1133, Dynasylan^{®} 1204, Dynasylan^{®} 1505, Dynasylan^{®} 1506, Dynasylan^{®} AMEO, Dynasylan^{®} AMEO-T, Dynasylan^{®} VTEO, Dynasylan^{®} VTMO, Dynasylan^{®} VTMOEO, Dynasylan^{®} 6598 (jeweils der Evonik Industries AG), Geniosil^{®} XL 926, Geniosil^{®} XL 10, Geniosil^{®} XL 12, Geniosil^{®} GF 56, Geniosil^{®} GF 62, Geniosil^{®} GF 31, Geniosil^{®} XL 32, Geniosil^{®} XL 33, Geniosil^{®} GF 39, Geniosil^{®} GF 60, Geniosil^{®} XL 63 und Geniosil^{®} XL 65 (jeweils der Wacker Chemie AG).

Die zugesetzte Menge an Wasserfänger richtet sich nach dem Wassergehalt der Bestandteile der Formulierung und liegt üblicherweise im Bereich von ca. 1 Gew. %. Die Wasserfänger können in einer Menge von 0,1 bis 2 Gew.-%, bezogen auf die gesamte Zusammensetzung, bevorzugt von 0,2 bis 2 Gew.-%, stärker bevorzugt von 0,2 bis 1,8 Gew.-% und noch stärker bevorzugt 0,25 bis 1,5 Gew.-%, enthalten sein.

Die Zusammensetzung kann neben den bereits beschriebenen Additiven gegebenenfalls übliche Hilfsmittel wie Netzmittel, etwa auf Basis von Polyacrylaten und/oder Polyphosphaten, Entschäumer, wie Silikonentschäumer, Farbstoffe, Fungizide, oder diverse Füllstoffe, wie Vermiculit, anorganische Fasern, Quarzsand, Mikroglaskugeln, Glimmer, Siliziumdioxid, Mineralwolle, und dergleichen enthalten.

Zusätzliche Additive, wie Verdicker und/oder Rheologieadditive, sowie Füllstoffe können der Zusammensetzung zugegeben werden. Als Rheologieadditive, wie Anti-Absetzmittel, Antiablaufmittel und Thixotropiermittel, werden vorzugsweise Polyhydroxycarbonsäureamide, Harnstoffderivate, Salze ungesättigter Carbonsäureester, Alkylammoniumsalze saurer Phosphorsäurederivate, Ketoxime, Aminsalze der p-Toluolsulfonsäure, Aminsalze von Sulfonsäurederivaten sowie wässrige oder organische Lösungen oder Mischungen der Verbindungen verwendet werden verwendet. Daneben können Rheologieadditive auf Basis pyrogener oder gefällter Kieselsäuren oder auf Basis silanisierter pyrogener oder gefällter Kieselsäuren eingesetzt werden. Bevorzugt handelt es sich bei dem Rheologieadditiv um pyrogene Kieselsäuren, modifizierte und nicht modifizierte Schichtsilikate, Fällungskieselsäuren, Celluloseether, Polysaccharide, PU- und Acrylatverdicker, Harnstoffderivate, Rizinusölderivate, Polyamide und Fettsäureamide und Polyolefine, soweit sie in fester Form vorliegen, pulverisierte Cellulosen und/oder Suspensionsmittel wie z.B. Xanthan Gummi.

Ferner kann die Zusammensetzung mindestens einen Katalysator enthalten, wobei dieses, sofem vorhanden, reaktionsinhibierend von dem alkoxyfunktionellen Polymer getrennt ist. Durch das Vernetzungsmittel können verschiedene Eigenschaften, wie Haftung zum Untergrund, bessere Benetzung der Additive und Aushärtungsgeschwindigkeit der Zusammensetzung gezielt optimiert und maßgeschneidert werden.

Als Katalysatoren können alle Verbindungen verwendet werden, die geeignet sind, die Bildung der Si-O-Si-Bindungen zwischen den Silan-Gruppen der Polymere zu katalysieren. Beispielhaft können Metallverbindungen, wie Titanverbindungen, Zinnverbindungen erwähnt werden. Alternativ können saure oder basische Katalysatoren erwähnt werden.

Unter den Zinnverbindungen sind Dibutylzinndilaurat, Dibutylzinnmaleat, Dibutylzinndiacetat, Dibutylzinndioctanoat, Dibutylzinnacetylacetonat, Dibutyl zinnoxid, oder entsprechende Verbindungen des Dioctylzinn wie Dioctylzinndilaurat, Zinnnaphthenat Dimethylzinndineododecanoat, Reaktionsprodukte aus Dibutylzinnoxid und Phthalsäureester bevorzugt.

Unter den basischen Aminen sind Triethylamin, Tributylamin, Trioctylamin, Monoethanolamin, Diethanolamin, Triethanolamin, Triisopropanolamin, Tetramethylendiamin, Quadrol, Diethylentriamin, Dimethylanilin, Protonenschwamm, *N*,*N*'-Bis[2-(dimethylamino)ethyl]-*N*,*N'*-dimethylethylendiamin, *N*,*N*-Dimethylcyclohexylamin, *N-*Dimethylphenlyamin, 2-Methylpentamethylenediamin, 2-Methylpentamethylenediamin, 1,1,3,3-Tetramethylguanidin, 1,3-Diphenylguanidin, Benzamidin, N-Ethylmorpholin, 2,4,6-Tris(dimethylaminomethyl)phenol (TDMAMP), 1,8-Diazabicyclo[5.4.0]undec-7-en (DBU) und 1,5-Diazabicyclo(4.3.0)non-5-en (DBN); n-Pentylamin, n-Hexylamin, Di-n-propylamin und Ethylendiamin; DABCO, DMAP, PMDETA, Imidazol und 1-Methylimidazol oder Salze aus Aminen und Carbonsäuren und Polyetheramine, wie Polyethermonoamine, Polyetherdiamine oder Polyethertriamine, wie z.B. die Jeffamine von Huntsman und Etheramine, wie z.B. die Jeffkats von Huntsman bevorzugt. In dieser Hinsicht wird Bezug genommen auf die Anmeldungen WO 2011/157562 A1 und WO 2013/003053 A1.

Unter den Titanverbindungen sind Titanatester bevorzugt, wie Tetrabutyltitanat, Tetrapropyltitanat, Tetraisopropyltitanat, Tetraacetylacetonat-titanat.

Unter den Metallverbindungen als Katalysator können ferner Organoaluminiumverbindungen oder Reaktionsprodukte aus Bismutsalzen oder Chelatverbindungen, wie Zirkoniumtetracetylacetonat, erwähnt werden.

Als saure Katalysatoren können Phosphorsäure- bzw. Phosphorsäureester, Toluolsulfonsäuren und Mineralsäuren beispielhaft erwähnt werden.

Als basische Katalysatoren können Lösungen einfacher Basen wie NaOH, KOH, K₂CO₃, Ammoniak, Na₂CO₃, aliphatische Alkoholate oder Phenolate beispielhaft erwähnt werden.

Die Art und die Menge des Katalysators werden abhängig von dem gewählten alkoxysilanfunktionellen Polymer und der gewünschten Reaktivität gewählt.

Wie eingangs erwähnt, ist ein zweiter Gegenstand der Erfindung ein Mehrkomponentensystem, das eine oben beschriebene Brandschutz-Zusammensetzung umfasst, mit einer ersten Komponente (A) und einer von der ersten Komponente getrennten zweiten Komponente (B), wobei die erste Komponente (A) das alkoxysilanfunktionelle Polymer enthält und die zweite Komponente (B) den flüssigen Kohlenstofflieferanten enthält.

Die erfindungsgemäße Zusammensetzung ist bevorzugt als Zweikomponentensystem konfektioniert.

Wie bereits erwähnt, umfasst die erfindungsgemäße Brandschutz-Zusammensetzung mindestens: ein alkoxyfuntionelles Polymer, insbesondere einen alkoxysilanfunktionellen Polyether oder ein alkoxysilanfunktionelles Polyurethan, eine Säurequelle (Dehydrierungskatalysator) und einen flüssigen Kohlenstofflieferanten. Erfindungsgemäß ist der alkoxysilanfunktionelle Polyether oder das alkoxysilanfunktionelle Polyurethan räumlich getrennt von dem flüssigen Kohlenstofflieferanten, um eine Reaktion zwischen diesen beiden Bestandteilen während der Lagerung zu verhindern. Die Säurequelle kann dabei in der Komponente enthalten sein, die das alkoxyfunktionelle Polymer, insbesondere den alkoxysilanfunktionellen Polyether oder das alkoxysilanfunktionelle Polyurethan enthält, oder in der Komponente enthalten sein, die den flüssigen Kohlenstofflieferanten enthält.

Die gegebenenfalls in der Zusammensetzung enthaltenen weiteren Bestandteile sind entsprechend ihrer Funktion und/oder ihrer Verträglichkeit untereinander und mit den in der Zusammensetzung enthaltenen Verbindungen aufgeteilt und können in einer der beiden Komponenten oder in beiden Komponenten enthalten sein.

Ferner kann die Aufteilung der weiteren Bestandteile, insbesondere der festen Bestandteile davon abhängen, in welchen Mengen diese in der Zusammensetzung enthalten sein soll. Durch entsprechende Aufteilung kann sich gegebenenfalls ein höherer Anteil, bezogen auf die gesamte Zusammensetzung ergeben.

In einer bevorzugten Ausführungsform ist das Mehrkomponentensystem ein Zweikomponentensystem, umfassend eine erste Komponente (A), die ein alkoxysilanfunktionelles Polymer und einen Dehydrierungskatalysator enthält, und eine davon reaktionsinhibierend und/oder räumlich getrennte zweite Komponente, die einen flüssigen Kohlenstofflieferanten enthält.

In einer weiter bevorzugten Ausführungsform umfasst das Zweikomponentensystem eine erste Komponente (A), die ein alkoxysilanfunktionelles Polymer, einen Dehydrierungskatalysator und ein Treibmittel enthält, und eine davon reaktionsinhibierend und/oder räumlich getrennte zweite Komponente, die einen flüssigen Kohlenstofflieferanten enthält.

In einer alternativen Ausführungsform umfasst das Zweikomponentensystem eine erste Komponente (A), die ein alkoxysilanfunktionelles Polymer, einen Dehydrierungskatalysator und ein Treibmittel enthält, und eine davon reaktionsinhibierend und/oder räumlich getrennte zweite Komponente, die einen flüssigen Kohlenstofflieferanten und einen festen weiteren Kohlenstofflieferanten enthält.

In einer weiter bevorzugten Ausführungsform umfasst das Zweikomponentensystem eine erste Komponente (A), die ein alkoxysilanfunktionelles Polymer, einen Dehydrierungskatalysator und ein Treibmittel enthält, und eine davon reaktionsinhibierend und/oder räumlich getrennte zweite Komponente, die einen flüssigen Kohlenstofflieferanten und ein Vernetzungsmittel enthält.

In einer stärker bevorzugten Ausführungsform umfasst das Zweikomponentensystem eine erste Komponente (A), die ein alkoxysilanfunktionelles Polymer, einen Dehydrierungskatalysator, ein Treibmittel und organische und/oder anorganische Additive enthält, und eine davon reaktionsinhibierend und/oder räumlich getrennte zweite Komponente, die einen flüssigen Kohlenstofflieferanten und ein Vernetzungsmittel enthält.

In einer noch stärker bevorzugten Ausführungsform umfasst das Zweikomponentensystem einen erste Komponente (A), die einen alkoxysilanfunktionellen Polyether und/oder ein alkoxysilanfunktionelles Polyurethan, einen Dehydrierungskatalysator und ein Treibmittel enthält, und eine davon reaktionsinhibierend und/oder räumlich getrennte zweite Komponente, die einen flüssigen Kohlenstofflieferanten und gegebenenfalls ein Vernetzungsmittel enthält.

Die Zusammensetzung wird als Paste mit einem Pinsel, einer Rolle oder durch Sprühen auf das Substrat, welches metallisch sein kann, Kunststoff im Fall von Kabeltrassen oder Weichschotts aus Mineralwolle aufgebracht. Bevorzugt wird die Zusammensetzung mittels eines Airless-Sprühverfahrens aufgebracht.

Die erfindungsgemäße Zusammensetzung zeichnet sich, verglichen mit den lösemittel- und wasserbasierten Systemen, durch eine relativ schnelle Aushärtung durch eine Kondensationsreaktion und damit nicht notwendige physikalische Trocknung aus. Dies ist insbesondere dann sehr wichtig, wenn die beschichteten Bauteile schnell belastet bzw. weiterverarbeitet werden müssen, sei es durch Beschichtung mit einer Deckschicht oder ein Bewegen oder Transportieren der Bauteile. Auch ist die Beschichtung somit deutlich weniger anfällig gegenüber äußeren Einflüssen auf der Baustelle, wie z.B. Beaufschlagung mit (Regen)-wasser oder Staub und Schmutz, was in lösemittel- oder wasserbasierten Systemen zu einem Auswaschen von wasserlöslichen Bestandteilen führen kann, bzw. bei der Aufnahme von Staub zu einer reduzierten Wirkung.

Ferner wird besonders im Vergleich zu lösemittelbasierten Systemen eine Belastung von Mensch und Umwelt durch flüchtige organische Verbindungen (volatile organic compounds, VOC) minimiert.

Durch die geringe Viskosität der Zusammensetzung, also nach dem Vermischen der beiden Komponenten, trotz des hohen Feststoffanteils, der ohne die Zugabe leicht flüchtiger Lösemittel, bleibt die Zusammensetzung einfach zu verarbeiten, insbesondere durch gängige Sprühverfahren.

Durch die Konfektionierung als Zweikomponenten-System wird eine sehr gute Lagerstabilität erreicht.

Deshalb ist die erfindungsgemäße Brandschutz-Zusammensetzung insbesondere als Brandschutzbeschichtung, insbesondere sprühbare Beschichtung für Konstruktionselemente, insbesondere für Bauteile auf metallischer und nicht metallischer Basis geeignet. Die erfindungsgemäße Brandschutz-Zusammensetzung findet vor allem im Baubereich als Beschichtung, insbesondere Brandschutzbeschichtung für Stahlkonstruktionselemente Verwendung. Es ist aber auch eine Verwendung für die Beschichtung einzelner Kabel, Kabelbündel, Kabeltrassen und Kabelkanäle oder anderer Leitungen sowie als Brandschutzbeschichtung für Konstruktionselemente aus anderen Materialien als Stahl, wie Beton oder Holz, denkbar.

Ein dritter Gegenstand der Erfindung ist daher die Verwendung der erfindungsgemäßen Zusammensetzung als Beschichtung, insbesondere als Beschichtung für Konstruktionselemente oder Bauelemente aus Stahl, Beton, Holz und anderen Materialien, wie etwa Kunststoffen, insbesondere als Brandschutzbeschichtung für einzelne Kabel, Kabelbündel, Kabeltrassen und Kabelkanäle oder andere Leitungen oder Weichschotts.

Die folgenden Beispiele dienen der weiteren Erläuterung der Erfindung.

### AUSFÜHRUNGSBEISPIELE

Für die Herstellung von erfindungsgemäßen dämmschichtbildenden Zusammensetzungen werden wie nachfolgend angegeben die Einzelkomponenten mit Hilfe eines Dissolvers vermengt und homogenisiert. Die Feststoffe Exolit AP 462 (Ammoniumpolyphosphat mikroverkapselt mit Melaminharz, Clariant), Kronos 2056 (Titandioxid, Kronos International), Melafine (Melamin, OCI) und Charmor PM 40 (2,2-Bis(hydroxymethyl)-1,3-propan-diol, Perstop), wurde vor der Herstellung der Zusammensetzungen 18 Stunden bei 110 °C getrocknet.

Die Lagerung der Zusammensetzungen erfolgte unter Ausschluss von Luftfeuchtigkeit in 80 ml PE Bechern bei 40 °C.

### Beispiel 1

| Bestandteil Komponente A | Menge in [g] |
|---|---|
| Geniosil STP-E 10¹⁾ | 135,5 |
| Geniosil GF 96 ²⁾ | 6,2 |
| Geniosil XL 10 ³⁾ | 6,1 |
| Exolit AP 462 ⁴⁾ | 75,1 |
| Kronos 2056 ⁵⁾ | 37,6 |
| Melafine ⁶⁾ | 37,4 |

| | |
|---|---|
| ¹⁾ Dimethoxy(methyl)silylmethylcarbamate-terminierter Polyether, Wacker Chemie AG ²⁾ 3-Aminopropyltrimethoxysilan, Wacker Chemie AG ³⁾ Trimethoxyvinylsilan, Wacker Chemie AG ⁴⁾ Ammoniumpolyphosphat mikroverkapselt mit Melaminharz, Clariant ⁵⁾ Titandioxid, Kronos International ⁶⁾ Melafin, OCI Melamine | |

### Beispiel 2

| Bestandteil | Menge in [g] |
|---|---|
| KAN E KA MS Polymer SAX015 ⁷⁾ | 135,3 |
| Geniosil GF 96 ²⁾ | 6,2 |
| Geniosil XL 10 ³⁾ | 6,1 |
| Exolit AP 462 ⁴⁾ | 75,4 |
| Kronos 2056 ⁵⁾ | 37,6 |
| Melafine ⁶⁾ | 37,9 |

| | |
|---|---|
| ⁷⁾ silanterminierter Polyether, Kaneka Cooperation | |

### Beispiel 3

| Bestandteil | Menge in [g] |
|---|---|
| DESMOSEAL S XP 2749 ⁸⁾ | 135,3 |
| Geniosil GF 96 ²⁾ | 6,5 |
| Geniosil XL 10 ³⁾ | 6,1 |
| Exolit AP 462 ⁴⁾ | 75,3 |
| Kronos 2056 ⁵⁾ | 37,9 |
| Melafine ⁶⁾ | 37,6 |

| | |
|---|---|
| ⁸⁾ Aliphatisches silanterminiertes Polyurethan, Covestro AG | |

### Beispiel 4

| Bestandteil | Menge in [g] |
|---|---|
| DESMOSEAL S XP 2749 ⁸⁾ | 132,5 |
| Geniosil GF 96 ²⁾ | 6,3 |
| Geniosil XL 10³⁾ | 6,2 |
| Exolit AP 462 ⁴⁾ | 75,7 |
| Kronos 2056 ⁵⁾ | 37,7 |
| Melafine ⁶⁾ | 37,8 |
| 1,1,3,3-Tetramethylguanidine | 3,35 |

### Vergleichsbeispiel 1

| Bestandteil | Menge in [g] |
|---|---|
| Geniosil STP-E 10¹⁾ | 131,7 |
| Geniosil GF 96 ²⁾ | 6,1 |
| Geniosil XL 10³⁾ | 6,3 |
| Exolit AP 462 ⁴⁾ | 60,0 |
| Kronos 2056 ⁵⁾ | 30,1 |
| Melafine ⁶⁾ | 30,2 |
| Charmor PM 40 ⁹⁾ | 30,1 |

| | |
|---|---|
| ⁹⁾ 2,2-Bis(hydroxymethyl)-1,3-propan-diol), Perstop | |

### Vergleichsbeispiel 2

| Bestandteil | Menge in [g] |
|---|---|
| DESMOSEAL S XP 2749 ⁸⁾ | 131,5 |
| Geniosil GF 96 ²⁾ | 6,1 |
| Geniosil XL 10 ³⁾ | 6,4 |
| Exolit AP 462 ⁴⁾ | 60,3 |
| Kronos 2056 ⁵⁾ | 30,4 |
| Melafine ⁶⁾ | 30,7 |
| Charmor PM 40 ⁹⁾ | 30,6 |

### Vergleichsbeispiel 3

| Bestandteil | Menge in [g] |
|---|---|
| KANEKA MS Polymer SAX015 ⁷⁾ | 131,51 |
| Geniosil GF 96 ²⁾ | 16,23 |
| Geniosil XL 10 ³⁾ | 6,24 |
| Exolit AP 462 ⁴⁾ | 59,79 |
| Kronos 2056 ⁵⁾ | 31,5 |
| Melafine ⁶⁾ | 30,2 |
| Charmor PM 40 ⁷⁾ | 30,2 |

### Vergleichsbeispiel 4

| Bestandteil | Menge in [g] |
|---|---|
| DESMOSEAL S XP 2749 ⁸⁾ | 131,5 |
| Geniosil GF 96 ²⁾ | 6,1 |
| Geniosil XL 10 ³⁾ | 6,2 |
| Exolit AP 462 ⁴⁾ | 60,2 |
| Kronos 2056 ⁵⁾ | 30,1 |
| Melafine ⁶⁾ | 30,0 |
| Charmor PM 40 ⁹⁾ | 15,0 |
| Polyol 4360 ¹⁰⁾ | 15,1 |

| | |
|---|---|
| ¹⁰⁾ propoxyliertes 2,2-Bis(hydroxymethyl)-1,3-propan-diol), Perstop | |

### Vergleichsbeispiel 5

| Bestandteil | Menge in [g] |
|---|---|
| Geniosil STP-E 10¹⁾ | 131,3 |
| Geniosil GF 96 ²⁾ | 6,0 |
| Geniosil XL 10 ³⁾ | 6,2 |
| Exolit AP 462 ⁴⁾ | 60,4 |
| Kronos 2056 ⁵⁾ | 30,6 |
| Melafine ⁶⁾ | 30,1 |
| Charmor PM 40 ⁷⁾ | 15,2 |
| Polyol 4360 ¹⁰⁾ | 15,3 |

### Viskositätsmessungen

Es wird eine Viskositätskurve mit einem luftgelagerten Kinexus Rheometer von Malvern Instruments Ltd., UK, gemessen. Dazu wird ein Kegel-Platte-System mit einem Durchmesser von 20 mm und einem Winkel von 1 ° verwendet. Die Messtemperatur beträgt 45 °C und die Temperierzeit nach Probenvorbereitung beträgt 2 Minuten. Eine Schergeschwindigkeits-Treppe mit 14 Stufen ist angegeben: 0,1 /s; 0,2154 /s; 0,4642 /s; 1 /s; 2,154 /s; 4.642 /s; 10 /s; 21,54 /s; 46,42 /s; 100 /s; 215,4 /s; 300 /s 464,2 /s; 500 /s. Die Messpunktdauer ist 11s und die Integrationszeit beträgt 5s. Die Viskosität bei 100 /s wird zum Vergleich der Proben verwendet. Bei den angegebenen Werten handelt es sich um den Mittelwert zweier Messwerte bei 100 s⁻¹.

**Tabelle 1: Viskosität von Komponente A der Beispiele 1 bis 4 in Pa s bei 45°C und 100 s⁻¹**

| | 0 Tage | 8 Tage | 14 Tage | 28 Tage |
|---|---|---|---|---|
| Beispiel 1 | 6,765 | 6,289 | 7,221 | 7,185 |
| Beispiel 2 | 0,356 | 0,489 | 0,459 | 0,54 |
| Beispiel 3 | 2,877 | 3,357 | 3,403 | 3,77 |
| Beispiel 4 | 3,167 | 2,013 | 3,751 | 3,440 |

**Tabelle 2: Viskosität der Vergleichsbeispiele 1 bis 5 in Pa·s bei 45°C und 100 s⁻¹**

| | 0 Tage | 8 Tage | 18 Tage |
|---|---|---|---|
| Vergleichsbeispiel 1 | 11,14 | 29,5 | 28,53 |
| Vergleichsbeispiel 4 | 3,092 | 69,66 | 283,90 |
| Vergleichsbeispiel 5 | 6,593 | 30,1 | 30,86 |
| | | | |

| | 0 Tage | 8 Tage | 14 Tage |
|---|---|---|---|
| Vergleichsbeispiel 2 | 3,955 | 34,815 | 150,35 |
| Vergleichsbeispiel 3 | 0,520 | 2,078 | 3,688 |

Wie die Daten in den Tabellen 1 und 2 deutlich zeigen, nimmt die Viskosität der Mischungen der Beispiele 1 bis 4, bei denen kein Kohlenstofflieferant und damit keine Hydroxylgruppen-haltige bzw. -lieferende Verbindung in der Polymerkomponente enthalten sind, über die Lagerdauer nur unwesentlich zu. Im Vergleich dazu nimmt die Viskosität der Mischungen der Vergleichsbeispiele 1 bis 5, bei denen ein Kohlenstofflieferant und damit eine Hydroxylgruppen-haltige bzw. -lieferende Verbindung in der Polymerkomponente enthalten sind, deutlich zu. Dies ist ein eindeutiger Hinweis darauf, dass die Lagerstabilität der Mischungen aus den Vergleichsbeispielen wesentlich geringer ist als die der Mischungen aus den Beispielen 1 bis 4.

## Patentansprüche

1. Brandschutz-Zusammensetzung, umfassend
- ein alkoxysilanfunktionelles Polymer, das terminiert und/oder als Seitengruppen entlang der Polymerkette alkoxyfunktionelle Silangruppen der allgemeinen Formel (I) enthält
-Si(R¹)ₘ(OR²)₃₋ₘ (I),
worin R¹ für einen linearen oder verzweigten C₁-C₁₆-Alkylrest, R² für einen linearen oder verzweigten C₁-C₆-Alkylrest und m für eine ganze Zahl von 0 bis 2 steht,
- einen Dehydrierungskatalysator,
- einen flüssigen Kohlenstofflieferanten, und
- gegebenenfalls ein Treibmittel,
wobei das alkoxysilanfunktionelle Polymer reaktionsinhibierend getrennt von dem flüssigen Kohlenstofflieferanten vorliegt, **dadurch gekennzeichnet, dass** der flüssige Kohlenstofflieferant aus der Gruppe bestehend aus flüssigen Polyether-Polyolen, flüssigen Polyester-Polyolen, flüssigen glycerinbasierten Polyolen und Mischungen davon und flüssigen Epoxid-Verbindungen ausgewählt ist.

2. Brandschutz-Zusammensetzung nach Anspruch 1, wobei das Polymer ein Grundgerüst umfasst, das aus der Gruppe, bestehend aus einem Polyether, Polyester, Polyetherester, Polyamid, Polyurethan, Polyesterurethan, Polyetherurethan, Polyetheresterurethan, Polyamidurethan, Polyharnstoff, Polyamin, Polycarbonat, Polyvinylester, Polyacrylat, Polyolefin, Polyisobutylen, Polysulfid, Kautschuk, Neopren, Phenolharz, Epoxidharz und Melamin, ausgewählt ist.

3. Brandschutz-zusammensetzung nach Anspruch 2, wobei das Polymer ein Polyether oder ein Polyurethan ist.

4. Brandschutz-Zusammensetzung nach einem der vorhergehenden Ansprüche, wobei das alkoxysilanfunktionelle Polymer mindestens 2 alkoxyfunktionelle Silangruppen trägt.

5. Brandschutz-Zusammensetzung nach einem der vorhergehenden Ansprüche, wobei die Zusammensetzung ferner einen weiteren, nicht flüssigen Kohlenstofflieferanten enthält, der ebenfalls reaktionsinhibierend getrennt von dem alkoxysilanfunktionellen Polymer vorliegt.

6. Brandschutz-Zusammensetzung nach einem der vorhergehenden Ansprüche, wobei die Zusammensetzung ferner mindestens ein Vernetzungsmittel enthält.

7. Brandschutz-Zusammensetzung nach Anspruch 6, wobei die Zusammensetzung ferner ein Co-Vernetzungsmittel enthält.

8. Brandschutz-Zusammensetzung nach Anspruch 7, wobei das Vernetzungsmittel Wasser ist.

9. Brandschutz-Zusammensetzung nach einem der vorhergehenden Ansprüche, wobei die Zusammensetzung ferner organische und/oder anorganische und/oder weitere Additive enthält.

10. Mehrkomponentensystem umfassend eine Brandschutz-Zusammensetzung nach einem der vorhergehenden Ansprüche, mit einer ersten Komponente (A) und einer von der ersten Komponente getrennten zweiten Komponente (B), wobei die erste Komponente (A) den alkoxysilanfunktionelle Polyether oder das alkoxysilanfunktionelle Polyurethan enthält und die zweite Komponente (B) den flüssigen Kohlenstofflieferanten enthält.

11. Verwendung der Brandschutz-Zusammensetzung nach einem der Ansprüche 1 bis 9 oder des Mehrkomponentensystems nach Anspruch 10 als Beschichtung, insbesondere als Brandschutzbeschichtung.

12. Verwendung nach Anspruch 11 für die Beschichtung von Konstruktionselementen.

13. Verwendung nach Anspruch 12 für die Beschichtung von nicht metallischen Bauteilen.

## Claims

1. A fire protection composition, comprising
- an alkoxysilane-functional polymer, which, as terminal groups and/or as side groups along the polymer chain, contains alkoxy-functional silane groups of the general formula (I)
-Si(R¹)ₘ(OR²)₃₋ₘ (I),
where R¹ represents a linear or branched C₁-C₁₆ alkyl functional group, R² represents a linear or branched C₁-C₆ alkyl functional group, and m represents an integer from 0 to 2,
- a dehydrogenation catalyst,
- a liquid carbon source, and
- optionally a blowing agent,
the alkoxysilane-functional polymer being separated from the liquid carbon source in a reaction-inhibiting manner, **characterized in that** the liquid carbon source is selected from the group consisting of liquid polyether polyols, liquid polyester polyols, liquid glycerol-based polyols, and mixtures thereof, and liquid epoxy compounds.

2. The fire protection composition according to claim 1, wherein the polymer comprises a backbone, which is selected from the group consisting of a polyether, polyester, polyether ester, polyamide, polyurethane, polyester urethane, polyether urethane, polyether ester urethane, polyamide urethane, polyurea, polyamine, polycarbonate, polyvinyl ester, polyacrylate, polyolefin, polyisobutylene, polysulfide, rubber, neoprene, phenolic resin, epoxy resin and melamine.

3. The fire protection composition according to claim 2, wherein the polymer is a polyether or a polyurethane.

4. The fire protection composition according to any of the preceding claims, wherein the alkoxysilane-functional polymer carries at least two alkoxy-functional silane groups.

5. The fire protection composition according to any of the preceding claims, wherein the composition further contains an additional, non-liquid carbon source, which is likewise separated from the alkoxysilane-functional polymer in a reaction-inhibiting manner.

6. The fire protection composition according to any of the preceding claims, wherein the composition further contains at least one crosslinking agent.

7. The fire protection composition according to claim 6, wherein the composition further contains a co-crosslinking agent.

8. The fire protection composition according to claim 7, wherein the crosslinking agent is water.

9. The fire protection composition according to any of the preceding claims, wherein the composition further contains organic and/or inorganic and/or further additives.

10. A multi-component system comprising a fire protection composition according to any of the preceding claims, comprising a first component (A) and a second component (B) separated from the first component, wherein the first component (A) contains the alkoxysilane-functional polyether or the alkoxysilane-functional polyurethane and the second component (B) contains the liquid carbon source.

11. A use of the fire protection composition according to any of claims 1 to 9, or of the multi-component system according to claim 10, as a coating, in particular as a fire protection coating.

12. The use according to claim 11 for coating construction elements.

13. The use according to claim 12 for coating non-metal components.

## Revendications

1. Composition d'ignifugation, comprenant
- un polymère à fonctionnalité alcoxysilane qui contient comme terminaison et/ou comme groupes latéraux le long de la chaîne polymère des groupes silane à fonctionnalité alcoxy de formule générale (I)
-Si(R¹)ₘ(OR²)₃₋ₘ (I),
où R¹ représente un radical alkyle linéaire ou ramifié en C₁ à C₁₆, R² représente un radical alkyle linéaire ou ramifié en C₁ à C₆ et m représente un nombre entier de 0 à 2,
- un catalyseur de déshydrogénation,
- une source de carbone liquide, et
- le cas échéant un agent d'expansion,
le polymère à fonctionnalité alcoxysilane étant présent de manière inhibitrice de la réaction, séparément de la source de carbone liquide, **caractérisée en ce que** la source de carbone liquide est choisie dans le groupe constitué de polyéther-polyols liquides, de polyester-polyols liquides, de polyols à base de glycérine liquides et de mélanges de ceux-ci et de composés époxydes liquides.

2. Composition d'ignifugation selon la revendication 1, le polymère comprenant un squelette, lequel est choisi dans le groupe constitué par un polyéther, un polyester, un polyétherester, un polyamide, un polyuréthane, un polyester uréthane, un polyéther uréthane, un polyétherester uréthane, un polyamide uréthane, une polyurée, une polyamine, un polycarbonate, un ester polyvinylique, un polyacrylate, une polyoléfine, un polyisobutylène, un polysulfure, un caoutchouc, un néoprène, une résine phénolique, une résine époxy et une mélamine.

3. Composition d'ignifugation selon la revendication 2, le polymère étant un polyéther ou un polyuréthane.

4. Composition d'ignifugation selon l'une des revendications précédentes, le polymère à fonctionnalité alcoxysilane portant au moins 2 groupes silane à fonctionnalité alcoxy.

5. Composition d'ignifugation selon l'une des revendications précédentes, la composition contenant en outre une autre source de carbone non liquide, laquelle est également présente de manière inhibitrice de la réaction, séparément du polymère à fonctionnalité alcoxysilane.

6. Composition d'ignifugation selon l'une des revendications précédentes, la composition contenant en outre un agent de réticulation.

7. Composition d'ignifugation selon la revendication 6, la composition contenant en outre un agent de co-réticulation.

8. Composition d'ignifugation selon la revendication 7, l'agent de réticulation étant de l'eau.

9. Composition d'ignifugation selon l'une des revendications précédentes, la composition contenant en outre des additifs organiques et/ou inorganiques et/ou d'autres additifs.

10. Système multicomposant comprenant une composition d'ignifugation selon l'une des revendications précédentes, comportant une première composante (A) et une seconde composante (B) séparée de la première composante, la première composante (A) contenant le polyéther à fonctionnalité alcoxysilane ou le polyuréthane à fonctionnalité alcoxysilane et la seconde composante (B) contenant la source de carbone liquide.

11. Utilisation de la composition d'ignifugation selon l'une des revendications 1 à 9 ou du système multicomposant selon la revendication 10 comme revêtement, en particulier comme revêtement ignifuge.

12. Utilisation selon la revendication 11, pour le revêtement d'éléments de construction.

13. Utilisation selon la revendication 12, pour le revêtement de composants non métalliques.
